Europäisches Patentamt

European Patent Office

Office européen des brevets

(11) Veröffentlichungsnummer: **0 501 554 A2**

## (12) EUROPÄISCHE PATENTANMELDUNG

(21) Anmeldenummer: **92200421.3**

(22) Anmeldetag: **14.02.92**

(51) Int. Cl.⁵: **H04N 9/79**

(30) Priorität: **23.02.91 DE 4105792**

(43) Veröffentlichungstag der Anmeldung:
**02.09.92 Patentblatt 92/36**

(84) Benannte Vertragsstaaten:
**AT DE FR GB**

(71) Anmelder: **Philips Patentverwaltung GmbH**
**Wendenstrasse 35 Postfach 10 51 49**
**W-2000 Hamburg 1(DE)**

㉘ **DE**

(71) Anmelder: **N.V. Philips' Gloeilampenfabrieken**
**Groenewoudseweg 1**
**NL-5621 BA Eindhoven(NL)**

㉘ **FR GB AT**

(72) Erfinder: **Peters, Matthias**
**Altonaer Strasse 348a**
**W-2083 Halstenbek(DE)**

(74) Vertreter: **Peters, Carl Heinrich, Dipl.-Ing. et al**
**Philips Patentverwaltung GmbH**
**Wendenstrasse 35 Postfach 10 51 49**
**W-2000 Hamburg 1(DE)**

(54) **Verfahren zum Umwandeln eines Fernsehsignals und Schaltungsanordnung zur Durchführung dieses Verfahrens.**

㊐ Beschrieben wird ein Verfahren zum Umwandeln eines vorgegebenen, insbesondere normgemäßen Fernsehsignals sowie eine Schaltungsanordnung zur Durchführung dieses Verfahrens.

Bei der Übertragung oder Aufzeichnung bzw. Wiedergabe von Fernsehsignalen kann oft nicht deren vollständige Bandbreite erhalten werden. Die Erfindung hat daher die Aufgabe, eine Verbesserung der Auflösung des Fernsehsignals im Sinne einer Erhöhung der Bandbreite zu erzielen.

Dazu wird ein vorgegebenes, insbesondere normgemäßes Fernsehsignal derart umgewandelt, daß daraus Signalabschnitte, die vorbestimmten Abschnitten von Zeilen einer vorbestimmten Zeilengruppe eines Fernsehbildes entsprechen, entnommen und in ein in seinem Zeitmaßstab derart umgewandeltes Signal überführt werden, daß die Signalabschnitte darin wenigstens nahezu das gesamte, dem Fernsehbild zugeordnete Zeitintervall des Fernsehsignals kontinuierlich ausfüllen.

EP 0 501 554 A2

FIG.1

Die Erfindung bezieht sich auf ein Verfahren zum Umwandeln eines vorgegebenen, insbesondere normgemäßen Fernsehsignals, sowie auf eine Schaltungsanordnung zur Durchführung dieses Verfahrens.

Aus der DE-OS 35 03 725 ist eine Vorrichtung zur Umwandlung eines Fernsehsignals in ein solches mit anderem Seitenverhältnis bekannt. In dieser, in einem Fernsehempfänger angeordneten Vorrichtung hat ein Demultiplexer für ein hochauflösendes Fernsehsignal mit analogen Multiplexkomponenten Zeilenspeicher zur Speicherung von Abtastwerten jeder Signalkomponente. Ein Wählcode-Decoder erzeugt einen Code, der eine Gruppe von Abtastwerten für jede Signalkomponente entsprechend dem Seitenverhältnis der Bildwiedergabeeinrichtung des Fernsehempfängers und/oder entsprechend dem Seitenverhältnis des im hochauflösenden Multiplex-Analog-Signal enthaltenen Bildes auswählt, so daß die ausgewählte Gruppe diejenige ist, welche Bildinformation liefert, die zu dem Seitenverhältnis der Wiedergabeeinrichtung paßt. Eine Zeitsteuereinheit reagiert auf den Code, so daß die gewählten Abtastwerte für eine Abtastzeile zuerst während der aktiven Abtastzeilenzeit gespeichert und dann während der nachfolgenden Abtastzeilenzeit sequentiell ausgelesen werden. Die gespeicherten Abtastwerte jeder Signalkomponente werden während im wesentlichen derselben zeitlichen Periode sequentiell ausgelesen, um die erforderlichen Signale Y, U und V zu ergeben. Ein ähnlich aufgebauter Demultiplexer kann benutzt werden zur Verarbeitung eines Frequenzmultiplexsignals mit vergrößertem Seitenverhältnis, wie etwa eines hochauflösenden Signals im NTSC-Format.

Bei einer derartigen Vorrichtung erfolgt ein zeilenweises Zerlegen und Zwischenspeichern sowie erneutes Zusammenschachteln eines sogenannten MAC-Signals, wobei die Enden der Zeilen des Fernsehbildes für Änderungen des Bildformates, d.h. des Seitenverhältnisses des Fernsehbildes entsprechend der benutzten Wiedergabeeinrichtung, abgeschnitten werden und somit die darin enthaltene Bildinformation verloren geht.

Bei der Übertragung oder der Aufzeichnung bzw. Wiedergabe von Fernsehsignalen in Fernsehempfangsgeräten und Videorecodern des Konsumgüterbereichs o.dgl. kann aufgrund vielfältiger technischer Kompromisse bei der Auslegung dieser Geräte oft nicht die vollständige Bandbreite des zu verarbeitenden Fernsehsignals, wie es insbesondere von einem Fernsehsender normgemäß vorgegeben wird, erhalten werden. Beispielsweise wird bei Videorecodern das im normgemäßen Fernsehsignal enthaltene Luminanzsignal oberhalb einer Frequenz von ca. 3 MHz stark bedämpft, so daß das Fernsehbild eine gewisse Unschärfe erhält. Außerdem werden die Farbsignalanteile im Fernsehsignal auf eine Bandbreite von etwa zweimal 500 kHz begrenzt, wodurch eine zusätzliche Unschärfe des Fernsehbildes hervorgerufen wird. Im Vergleich zwischen einem unmittelbar von einem Fernsehsender übertragenen, vorgegebenen, insbesondere normgemäßen Fernsehsignal einerseits und einem in der vorstehenden Weise in seiner Bandbreite begrenzten Fernsehsignal andererseits ergibt sich bei der Betrachtung der daraus resultierenden Fernsehbilder eine gravierende Qualitätseinbuße, die für den Konsumenten sehr störend ist und den Genuß beispielsweise einer Videoaufzeichnung beträchtlich schmälert. Andererseits ist eine Erhöhung der Bandbreite bei der Übertragung und/oder Aufzeichnung eines Fernsehsignals mit erhöhtem technischen Aufwand verbunden, der für einen Konsumartikel nicht vertretbar ist.

Die Erfindung hat die Aufgabe, ein Verfahren anzugeben und eine Schaltungsanordnung zur Durchführung dieses Verfahrens zu schaffen, durch die eine Verbesserung der Auflösung eines übertragenen und/oder aufgezeichneten Fernsehsignals im Sinne einer Erhöhung der diesem Fernsehsignal zugemessenen Bandbreite erzielt wird, ohne daß für ein zu der genannten Übertragung und/oder Aufzeichnung des Fernsehsignals benutztes Medium einem erhöhten technischen Aufwand unterworfen werden muß.

Diese Aufgabe wird erfindungsgemäß durch ein Verfahren gelöst, durch das ein vorgegebenes, insbesondere normgemäßes Fernsehsignal derart umgewandelt wird, daß daraus Signalabschnitte, die vorbestimmten Abschnitten von Zeilen einer vorbestimmten Zeilengruppe eines Fernsehbildes entsprechen, entnommen und in ein in seinem Zeitmaßstab derart umgewandeltes Signal überführt werden, daß die Signalabschnitte darin wenigstens nahezu das gesamte, dem Fernsehbild zugeordnete Zeitintervall des Fernsehsignals kontinuierlich ausfüllen.

Viele Fernsehsignale, insbesondere solche, die nach der PAL-, SECAM- oder NTSC-Norm verschlüsselt sind, enthalten einerseits Signalabschnitte, die für die Betrachtung eines damit wiedergegebenen Fernsehbildes von Bedeutung sind, und solche, deren Inhalt für das Fernsehbild unwesentlich ist. Dies kann Abschnitte von Zeilen, jedoch auch ganze Zeilen oder Zeilengruppen eines Fernsehbildes betreffen. Die Übertragung und Verarbeitung eines Fernsehsignals beansprucht wegen der in ihnen enthaltenen, für die Betrachtung unwesentlichen Abschnitte eine größere Bandbreite, als dies allein bei Übertragung nur der wesentlichen Signalabschnitte notwendig wäre. In Fällen, in denen nur eine relativ niedrigere Bandbreite eines Übertragungs- oder Verarbeitungsmediums zur Verfügung steht, werden nach den aus dem Stand der Technik bekannten Verfahren unwichtige und wichtige Signalabschnitte in ihrer Bandbreite begrenzt und damit eine Verringerung der Bildqualität, insbesondere der Schärfe des Fernsehbildes, bei der Betrachtung verursacht.

Demgegenüber wird nach dem erfindungsgemäßen Verfahren vor einer bandbreitenbegrenzenden Übertragung oder Verarbeitung des vorgegebenen Fernsehsignals eine Auswahl zwischen zu übertragenden oder zu verarbeitenden Signalabschnitten getroffen. Diese werden entsprechend dem Verhältnis der Summe ihrer Zeitdauern zur gesamten zeitlichen Länge des Fernsehsignals einer zeitlichen Dehnung unterworfen. Dabei werden die einem Fernsehbild entnommenen Signalabschnitte derart umgewandelt bzw. gedehnt, daß sie nach der Umwandlung wenigstens nahezu das gesamte, dem Fernsehbild zugeordnete Zeitintervall ohne Lücken ausfüllen. Die als unwichtig ausgesonderten, übrigen Abschnitte des Fernsehsignals werden nicht verarbeitet oder übertragen. Demgegenüber wird aber für die wichtigen Signalabschnitte durch die beschriebene Umwandlung des Zeitmaßstabs erreicht, daß die wichtigen Signalabschnitte bei der bandbreitenbegrenzenden Übertragung oder Verarbeitung in wesentlich geringerem Maße beeinträchtigt werden.

Zum Rückgewinnen des (ursprünglich) vorgegebenen, insbesondere normgemäßen Fernsehsignals werden das einem Fernsehbild zugeordnete umgewandelte Signal in die vorbestimmten Signalabschnitte überführt und die übrigen Abschnitte des dem Fernsehbild zugeordneten Zeitintervalls des Fernsehsignals mit einem Füllsignal ausgefüllt.

Bei der Rückgewinnung wird somit eine zeitliche Stauchung der vorbestimmten Signalabschnitte durchgeführt, so daß diese wiederum in ihrem Zeitmaßstab dem ursprünglich vorgegebenen Fernsehsignal entsprechen, beispielsweise in einer der genannen Fernsehnormen. Die Signalabschnitte können dann in üblicher Weise weiterverarbeitet oder auch auf einer Bildwiedergabeanordnung dargestellt werden. Diese Darstellung kann mit höherer Bildqualität, d.h. mit höherer Schärfe erfolgen, als sie einer unmittelbaren Übertragung bzw. Bearbeitung durch das bandbreitenbegrenzende Medium entsprechen würde. Der Betrachter erhält damit trotz der Unzulänglichkeiten des Mediums ein verbessertes Bild. Er erkauft diesen Vorteil mit einer Unterdrückung unwichtiger Abschnitte des Fernsehsignals.

Das bandbreitenbegrenzende Medium, dem das umgewandelte Signal zugeführt bzw. aus dem es entnommen wird, kann vorzugsweise durch einen Aufzeichnungsträger gebildet sein. Als solcher Aufzeichnungsträger kann insbesondere ein Magnetband dienen, wie es in einem handelsüblichen Videorecoder Verwendung findet. In gleicher Weise sind selbstverständlich auch andere Aufzeichnungsträger einsetzbar, wie z.B. Magnetplatten oder optische Plattenspeicher. Das erfindungsgemäße Verfahren erlaubt dann eine platzsparende Aufzeichnung bzw. Wiedergabe mit erhöhter Bildqualität, ohne daß eine Verbesserung der Auflösungsfähigkeit des Materials des Aufzeichnungsträgers oder eine aufwendigere mechanische Konstruktion der zugehörigen Aufzeichnungsvorrichtung erforderlich wäre.

Als unwichtige Abschnitte des Fernsehsignals im Sinne des erfindungsgemäßen Verfahrens sind bevorzugt darin enthaltene Synchron- und/oder Bezugssignale vom Überführen in das umgewandelte Signal ausgenommen. Im Fernsehsignal nach einer der vorstehend genannten Normen kann dies beispielsweise die sogenannte Schwarzschulter sein; auch die Synchronimpulse für Bild- und Zeilenwechsel können vom Überführen in das umgewandelte Signal ausgenommen werden. Dies kann auf unterschiedliche Weise durchgeführt sein. In einer Ausgestaltung können die Synchron- und/oder Bezugssignal zwar weiterhin im umgewandelten Signal enthalten sein, sie werden jedoch nicht der Dehnung ihres Zeitmaßstabs unterworfen wie die eine als wichtig ausgewählte Bildinformation enthaltenden Signalabschnitte, und nehmen diesen gegenüber im umgewandelten Signal nur einen geringen Zeitraum ein. In einer anderen Ausgestaltung können die Synchron- und/oder Bezussignale des vorgegebenen, insbesondere normgemäßen Fernsehsignals durch wesentlich verkürzte Signale ersetzt werden, um ihren Zeitanteil im umgewandelten Signal zu minimieren.

Bevorzugt wird jedoch die Folgefrequenz von im Fernsehsignal enthaltenen Zeilensynchronsignalen beim Überführen des Fernsehsignals in das umgewandelte Signal konstant gehalten. Dies bedeutet, daß die zeitlichen Abstände der Zeilensynchronsignale (Horizontalimpulse) nicht der zeitlichen Dehnung unterworfen werden. Bei der Umwandlung des Fernsehsignals nach dem erfindungsgemäßen Verfahren wird dann die Zuordnung der einzelnen Zeilensynchronsignale zu dem Bildinhalt der ihnen im vorgegebenen, insbesondere normgemäßen Fernsehsignal zugeordneten Zeilen aufgehoben. Bevorzugt wird die Bildinformation der ausgewählten Signalabschnitte nach ihrer zeitlichen Dehnung lückenlos oder wenigstens nahezu lückenlos aneinandergefügt und im Zeitraster der Zeilensynchronsignale des vorgegebenen, insbesondere normgemäßen Fernsehsignals zur Einfügung eines Zeilensynchronsignals unterbrochen. Ein derart aufbereites umgewandeltes Signal kann ohne weitere Verarbeitungsschritte einem für die Verarbeitung eines normgemäßen Fernsehsignals ausgelegten Medium zugeführt, insbesondere auf einem handelsüblichen Videorecorder ohne zusätzliche Änderungen aufgezeichnet werden.

Nach einer Weiterbildung der Erfindung kann dem vorgegebenen, insbesondere normgemäßen Fernsehsignal ein Kennsignal hinzugefügt sein zur Kennzeichnung, daß das Fernsehsignal in ein umgewandeltes Signal zu überführen ist. Ein derartiges Kennsignal läßt sich vorzugsweise in der sogenannten Datenzeile des vorgegebenen, insbesondere normgemäßen Fernsehsignals unterbringen. Es kann bereits im Sender eingefügt werden, jedoch auch vom Betrachter auf einem Verarbeitungsweg zwischen dem Sender oder einer sonstigen Fernsehsignalquelle und dem bandbreitenbegrenzenden Medium eingespeist und entsprechend in das Fernsehsignal eingefügt werden. Mit einem solchen Kennsignal läßt sich in einfacher Weise eine Schaltungsanordnung zur Durchführung der erfindungsgemäßen Umwandlung des Fernsehsignals steuern.

Ein bevorzugtes Anwendungsgebiet des erfindungsgemäßen Verfahrens ist in dem Fall zu sehen, daß das Fernsehsignal von einem (Breitband-)Kinofilm oder einer ähnlichen Bildquelle abgeleitet ist. Insbesondere ein von einem Kinofilm abgeleitetes Fernsehsignal stellt einen typischen Anwendungsfall des erfindungsgemäßen Verfahrens dar, weil bei der Umsetzung des Kinofilms im Fernsehsender am oberen und am unteren Rand des Fernsehbildes über eine vorgegebene Anzahl von Zeilen hinweg ein kontinuierlich schwarzer Bildinhalt eingefügt wird und nur die dazwischen übertragenen Zeilen des Fernsehsignals einen (wichtigen) Bildinhalt umfassen. Die als "schwarze Balken" am oberen und unteren Rand des Fernsehbildes dem Betrachter sichtbaren Zeilen bzw. Zeilengruppen, in denen als Bildinhalt durchgehend ein Bezugspegel übertragen wird, sind für die Übertragung oder Verarbeitung in einem bandbreitenbegrenzenden Medium, beispielsweise einem Videorecorder, unwichtig. Nach dem erfindungsgemäßen Verfahren werden nun die einen wichtigen Bildinhalt umfassenden Zeilen als umzuwandelnde Signalabschnitte ausgewählt und zeitlich so weit gedehnt, daß die im vorgegebenen, insbesondere normgemäßen Fernsehsignal für die übrigen Zeilen vorgesehenen Zeitintervalle ebenfalls mit einen wichtigen Bildinhalt umfassenden Signalabschnitten ausgefüllt werden. Entsprechend wird auf einem Aufzeichnungsträger der ursprünglich den nur einen Bezugspegel enthaltenden Zeilen vorbehaltene Platz auch für wichtige Signalabschnitte genutzt, die dann unter vollständige Ausnutzung der Bandbreite des Aufzeichnungsträgers mit erhöhter Auflösung aufgezeichnet und damit auch erhöhter Auflösung bzw. Bildschärfe später wiedergegeben werden können.

In entsprechender Anwendung können auch Fernsehsignale bearbeitet werden, die Fernsehbilder mit seitlich senkrecht verlaufenden Rändern ohne wichtigen Bildinhalt darstellen. Dafür werden anstelle der vorbestimmten Zeilengruppen vorbestimmte Abschnitte der den wichtigen Bildinhalt enthaltenden Zeilen dem Fernsehsignal entnommen.

Bei der besonderen Anwendung des erfindungsgemäßen Verfahrens auf die Aufzeichnung von (Breitband-) Kinofilmen kann durch das dem Fernsehsignal hinzugefügte Kennsignal bevorzugt angezeigt werden, daß bzw. ob das Fernsehsignal von einem (Breitband-) Kinofilm abgeleitet ist. Entsprechendes läßt sich auch für andere, ähnlich beschaffene Bildquellen durchführen.

Die Anzahl und/oder die Länge der dem vorgegebenen, insbesondere normgemäßen Fernsehsignal zu entnehmenden Signalabschnitte und/oder der übrigen Abschnitte des Fernsehsignals ist von den jeweils zu übertragenden Fernsehbildern abhängig und kann mit deren Bildinhalt verändert werden. Für die unterschiedlichen Anwendungsfälle ergeben sich damit unterschiedliche Zeitmaßstäbe, d.h. unterschiedliche Längenverhältnisse zwischen den dem vorgegebenen, insbesondere normgemäßen Fernsehsignal zu entnehmenden und den umgewandelten Signalabschnitten. Dieses Verhältnis und damit ein Maßsignal für die Umwandlung des Zeitmaßstabs der genannten Signalabschnitte lassen sich zwar vom Betrachter nach den jeweiligen Gegebenheiten der vorliegenden Fernsehbilder einstellen. Eine einfachere und sichere Betriebsweise wird jedoch dadurch erzielt, daß Anzahl und/oder Länge der Signalabschnitte (selbsttätig) detektiert werden und daß daraus (ebenfalls selbsttätig) das Maßsignal für die Umwandlung des Zeitmaßstabes des vorgegebenen, insbesondere normgemäßen Fernsehsignals in den Zeitmaßstab des umgewandelten Signals gebildet wird. Ein derartiges Verfahren paßt sich automatisch den gegebenenfalls von einer Sendung zur nächsten oder auch innerhalb einer Sendung variierenden Gegebenheiten, beispielsweise verschiedenen Kinofilm-Formaten, an. Damit verknüpft ist eine selbsttätige Ermittlung des Kinofilm-Formats, wie es mit dem aktuell vorgegebenen, insbesondere normgemäßen Fernsehsignal vorliegt. Zur Detektion im vorgenannten Sinne bietet sich z.B. eine Erkennung einzelner oder mehrerer lediglich einen schwarzen Bildinhalt umfassender Zeilen, Zeilengruppen oder Zeilenabschnitten an. Auch kann das Kinofilm-Format bzw. die Anordnung der Signalabschnitte im Fernsehsignal und damit Fernsehbild, die einen wichtigen und damit umzuwandelnden Bildinhalt umfassen, und damit das Fernsehbildformat des umgewandelten Signals durch das Kennsignal bestimmt werden, das beispielsweise in der Datenzeile des vorgegebenen Fernsehsignals mit übertragen wird.

Eine selbsttätige Formatermittlung läßt sich auch vorteilhaft mit der Übertragung und/oder Verarbeitung eines vom Betrachter willkürlich ausgewählten Bildausschnitts verknüpfen. Bestimmt nämlich der Betrachter beispielsweise durch eine Steuerung von Hand die dem vorgegebenen, insbesondere normgemäßen Fernsehsignal zu entnehmenden Signalabschnitte, können diese anschließend mittels der selbsttätigen Formatermittlung in ein umgewandeltes Signal überführt werden, ohne daß der Betrachter für die Umwandlung neue, besondere Steuersignale erzeugen muß. Auch der wahl- oder wechselweise, "gemischte" Gebrauch dieser Betriebsart mit der Verarbeitung von Kinofilmen ist bei dem vorstehend beschriebenen Verfahren möglich.

Vorteilhaft ist für das umgewandelte Signal eine gegebene Menge vorbestimmter Fernsehbildformate mit je einer vorbestimmten zeitlichen Ordnung der Signalabschnitte des vorgegebenen, insbesondere normgemäßen Fernsehsignals und einem vorbestimmten Zeitmaßstab des umgewandelten Signals verfügbar. Die Umwandlung erfolgt dabei zwischen dem vorgebenen, insbesondere normgemäßen Fernsehsignal und wahlweise einem der vorbestimmten Fernsehbilformate. Der Vorgang der Überführung des vorgegebenen Fernsehsignals in das umgewandelte Signal und umgekehrt läßt sich dadurch wesentlich vereinfachen. Bei einer stufenlosen Bildung des Maßsignals würden ggf. auch Signalstörungen, Schwankungen usw. zu unkontrollierten Variationen des Zeitmaßstabes für die Umwandlung führen.

Bevorzugt wird bei den vorstehend beschriebenen Ausführungen des erfindungsgemäßen Verfahrens die detektierte Anzahl und/oder Länge der zu entnehmenden Signalabschnitte und/oder übrigen Abschnitte des Fernsehsignals mit einer gegebenen Menge von Sollwerten verglichen, von denen jeder einem der vorbestimmten Fernsehbildformate zugeordnet ist. Bei zumindest weitgehender Übereinstimmung mit einem der Sollwerte wird das umgewandelte Signal in dem zugeordneten Fernsehbildformat gebildet. Damit ist ein einfaches Kriterium für die Bildung des Maßsignals gegeben, und es können Ungenauigkeiten und Abweichungen oder auch geringfügige Verarbeitungsfehler die Überführung des Fernsehsignals in das umgewandelte Signal und umgekehrt nicht störend beeinflussen.

Wird beispielsweise nach dieser Fortbildung des erfindungsgemäßen Verfahrens ein (Breitwand-) Kinofilm, der mit einem normgemäßen Fernsehsignalzugeführt wird, in ein umgewandeltes Signal überführt, wirken sich geringfügige Schwankungen der Zahl der Zeilen im Fernsehbild, die an dessen oberem und unterem Rand anstelle eines Bildsignals nur einen Schwarzpegel enthalten, auf das umgewandelte Signal und damit auch auf das Maßsignal nicht aus. Andererseits sind auch (Breitwand-) Kinofilme gewissen Normen unterworfen, so daß nur eine sehr begrenzte Anzahl vorbestimmter Fernsehbildformate und damit Sollwerte für Anzahl und/oder Länge der zu entnehmenden Signalabschnitte (und/oder der übrigen Abschnitte) vorgesehen werden muß. Gerade bei einer Verarbeitung von Kinofilmen läßt sich durch Auswerten der Anzahl von lediglich einen Schwarzpegel enthaltenden Zeilen im Fernsehbild sehr einfach eine Detektion und eine anschließende Zuordnung zu einem vorbestimmten Fernsehbildformat durchführen.

Dieses Verfahren ist entsprechend für den Fall anwendbar, daß die zu entnehmenden Signalabschnitte nicht vollständigen Zeilen des vorgegebenen Fernsehsignals, sondern nur Teilen davon entsprechen.

Das vorgegebene Fernsehsignal wird vorzugsweise nur bei Vorliegen des Kennsignals umgewandelt. Dies kann beispielsweise mit einer Anordnung erfolgen, die bei Fehlen eines Kennsignals das vorgegebene, insbesondere normgemäße Fernsehsignal unverändert an das Übertragungs- oder Aufzeichnungsmedium weiterleitet.

Zur Verringerung des Einflusses kurzzeitiger Störungen und Schwankungen wird der Vergleich mit den Sollwerten über eine Zeitdauer vorgenommen, die mehreren einem Fernsehbild zugeordneten Zeitintervallen des vorgegebenen, insbesondere normgemäßen Fernsehsignals entspricht.

Für das Rückgewinnen des (ursprünglich) vorgegebenen, insbesondere normgemäßen Fernsehsignals aus einem dem Übertragungs- und/oder Aufzeichnungsmedium entnommenen Fernsehsignal kann vorteilhaft das Vorliegen einer Umwandlung und wahlweise bzw. zusätzlich der Zeitmaßstab des umgewandelten Signals durch einen Vergleich der zeitlichen Ausdehnungen von im umgewandelten Signal enthaltenen Synchron- und/oder Bezugssignalen mit zugehörigen Synchron- und/oder Bezugssignalen im vorgegebenen, insbesondere normgemäßen Fernsehsignal ermittelt werden. Beim Rückgewinnen und der damit verbundenen, zeitlichen Stauchung der vom Medium gelieferten Signale werden in diesen Signalen enthaltene Bezugs- und/oder Synchronsignale ebenfalls gestaucht. Da diese Signale definierte zeitliche Längen aufweisen, kann aus einem Vergleich der Dauern dieser Signale beim vorgegebenen, insbesondere normgemäßen Fernsehsignal einerseits und beim umgewandelten Signal andererseits unmittelbar der Zeitmaßstab des umgewandelten Signals sowie ein Maßsignal ermittelt werden, das für die Umwandlung des Zeitmaßstabes des umgewandelten Signals in den Zeitmaßstab des (ursprünglich) vorgegebenen Fernsehsignals benutzt wird. Dabei bietet sich in erster Linie ein Längenvergleich von Zeilensynchronsignalen an, von denen dann zumindest in gewissen Abständen einzelne Impulse entsprechend den ausgewählten Signalabschnitten umgewandelt werden müssen.

Eine noch exaktere Rückgewinnung des (ursprünglich) vorgegebenen Fernsehsignals läßt sich dadurch erreichen, daß dem umgewandelten Signal beim Umwandeln aus dem vorgebenen, insbesondere normgemäßen Fernsehsignal ein Umwandlungsanzeigesignal hinzugefügt wird, das das Vorliegen einer Umwandlung und/oder den Zeitmaßstab des umgewandelten Signals anzeigt. Dieses Umwandlungsanzeigesignal kann bevorzugt innerhalb der sogenannten Datenzeile im umgewandelten Signal untergebracht werden. Eine einfache und exakte Übertragung der Information über die Umwandlung des Zeitmaßstabs läßt sich ferner dadurch erreichen, daß das Umwandlungsanzeigesignal aus dem Kennsignal abgeleitet wird. Für die nacheinander auszuführenden Umwandlungsschritte ist dann eine bereits zu Anfang fest vorgegebene Information maßgeblich; eine neue Detektion und die damit verbundene Fehlermöglichkeit kann dann entfallen.

Für den Fall, daß (vom Sender) kein Kennsignal vorliegt, kann das Umwandlungsanzeigesignal auch aus dem Maßsignal für die Umwandlung des Zeitmaßstabs bei der Bildung des umgewandelten Signals abgeleitet werden. Dadurch wird das Ergebnis einer einmalig ausgeführten Detektion bewahrt und für weitere Signalumwandlungen verwendet.

Für eine besonders einfache Ausführung des erfindungsgemäßen Verfahrens wird beim Überführen des vorgegebenen, insbesondere normgemäßen Fernsehsignals in das umgewandelte Signal nur ein im Fernsehsignal enthaltenes Leuchtdichtesignal umgewandelt. Dabei wird die Erkenntnis ausgenutzt, daß für den Schärfeeindruck bei einem Betrachter in erster Linie das Leuchtdichtesignal maßgeblich ist. Wird die Auflösung des Fernsehbildes bezüglich seines Leuchtdichtesignals erhöht, kann damit bereits eine wesentliche Bildverbesserung erzielt werden. Für eine exaktere, vollkommenere Auflösungserhöhung wird jedoch außer dem im Fernsehsignal enthaltenen Leuchtdichtesignal auch ein davon umfaßtes Farbsignal umgewandelt werden.

Ist das Farbsignal im Fernsehsignal einer Trägerschwingung aufmoduliert, muß zur Überführung vom vorgegebenen, insbesondere normgemäßen Fernsehsignal in das umgewandelte Signal und umgekehrt die Frequenz der Trägerschwingung entsprechend der Umwandlung des Zeitmaßstabs umgesetzt werden. Bevorzugt werden außerdem Leuchtdichte- und Farbsignal aus dem vorgegebenen, insbesondere normgemäßen Fernsehsignal vor dem Umwandeln getrennt und unabhängig nach dem der Umwandlung zugrunde liegenden Zeitmaßstab in umgewandelte Signale überführt.

Eine Anordnung zur Durchführung des Verfahrens und seiner Fortbildungen in der vorstehend beschriebenen Form umfaßt einen Speicher, in dem die Signalabschnitte des vorgegebenen, insbesondere normgemäßen Fernsehsignals mit Hilfe eines ersten Taktsignals gespeichert und aus dem sie mit Hilfe eines zweiten Taktsignal ausgelesen werden, wobei das Verhältnis der Taktfrequenzen der Taktsignale der Änderung des Zeitmaßstabes bei der Umwandlung entspricht.

Eine universell einsetzbare Schaltungsanordnung dieser Art wird dadurch erreicht, daß der Speicher als Vollbildspeicher ausgebildet ist. Darin können alle Bildpunktdaten eines Fernsehbildes des vorgegebenen insbesondere normgemäßen Fernsehsignals oder auch - bei der Rückgewinnung - des umgewandelten Signals im zugehörigen Zeitmaßstab abgespeichert und gemäß dem Zeitmaßstab der zu erzeugenden Form des Fernsehsignals wieder abgerufen, d.h. ausgelesen werden. Da stets alle Bildpunktdaten eines Vollbildes zur Verfügung stehen, können mit einer solchen Anordnung Überführungen in unterschiedliche Fernsehbildformate bzw. umgewandelte Signale einfach ausgeführt werden.

Bei einer Übertragung des vorgegebenen, insbesondere normgemäßen Fernsehsignals im Zeilensprungverfahren, bei dem jedes Fernsehbild (Vollbild) aus vorzugsweise zwei Halbbildern besteht, ist der Speicher vorzugsweise in zwei Halbbildspeicher gegliedert, in denen aus je einem Halbbild des Fernsehsignals die umzuwandelnden Signalabschnitte gespeichert werden. Eine derartige Anordnung ist vorteilhaft in der Weise betreibbar, daß jeweils einer der Halbbildspeicher mit dem Fernsehsignal des aktuellen Halbbildes beschrieben und gleichzeitig aus dem anderen der Halbbildspeicher das voraufgehende Halbbild oder daraus zu entnehmende Signalabschnitte entsprechend der gerade vorzunehmenden Überführung ausgelesen werden.

Der Speicher in den vorstehenden Ausführungsformen kann bevorzugt als Schieberegister ausgeführt sein, da die darin abzuspeichernden Bildpunktdaten in der Reihenfolge ihres Abspeicherns auch wieder ausgelesen werden müssen. Die Entnahme vorbestimmter Signalabschnitte bei der Überführung in das umgewandelte Signal kann dann beispielsweise dadurch erfolgen, daß durch das zweite Taktsignal beim Auslesen die nicht umzuwandelnden Signalabschnitte "durchgetaktet" werden. Dabei wird der Speicherinhalt des Schieberegisters ohne Auswertung der Signale an seinem Ausgang bis zum Beginn des nächsten zu entnehmenden Signalabschnitts weitergeschoben.

Zur Einsparung von Speicherplatz und damit zur Verringerung des Schaltungsaufwandes ist nach einer Fortbildung vorgesehen, daß der Speicher in eine Gesamtanzahl von wenigstens drei Speicherbereichen unterteilt ist, von denen wenigstens zwei, jedoch wenigstens einer weniger als die Gesamtanzahl und mehr als die Hälfte der Gesamtanzahl zum Speichern eines aktuell zugeführten Halbbildes des Fernsehsignals zusammengefaßt werden und dadurch für dieses Halbbild einen Halbbildspeicher bilden, während in dem oder den übrigen Speicherbereich(en) noch die letzten Teile des voraufgehenden Halbbildes gespeichert sind und zum Bilden des umgewandelten Signals der letzten Teile des voraufgehenden Halbbildes ausgelesen werden, und daß die Speicherbereiche zyklisch abwechselnd zum Speichern und Auslesen herangezogen werden.

In der Regel ist es wünschenswert, die Überführung nach dem erfindungsgemäßen Verfahren mit einer möglichst geringen Zeitverzögerung zwischen dem vorgegebenen Fernsehsignal und dem umgewandelten Signal oder auch umgekehrt vorzunehmen. Die Zeitintervalle zwischen dem Speichern und Wiederauslesen des Fernsehsignals bzw. der darin enthaltenen Bildpunktdaten kann dann je nach dem erwünschten Fernsehbildformat im Verhältnis zur gesamten Dauer eines Halbbildes kurz sein. Wird nun jedem Bildpunkt eines Halbbildes ein gesonderter Platz im Speicher zugewiesen, erhält man dafür eine schlechte Auslastung über der Zeit, da dieser Speicherplatz nur während eines kurzen Zeitintervalls innerhalb eines Halbbildes oder auch eines Vollbildes zum Speichern der Daten des zugehörigen Bildpunktes benötigt wird, während er in der übrigen Zeit nicht benutzt wird. Durch eine Unterteilung des Speichers in kleinere Speicherbereiche wird nun erreicht, daß frei werdende Speicherplätze möglichst schnell wieder zum Abspeichern herangezogen werden können. Beispielsweise wird bei der Verarbeitung des ersten Halbbildes eines Vollbildes im vorgegebenen, insbesondere normgemäßen Fernsehsignal der erste Teil des Halbbildes in einem ersten Speicherbereich gespeichert, der zweite Teil in einem zweiten Speicherbereich usw. Während des Speicherns im zweiten Speicherbereich kann der erste Speicherbereich bereits wieder zur Bildung des umgewandelten Signals ausgelesen werden. Sind daraus alle Bildpunktdaten ausgelesen, steht der erste Speicherbereich erneut zum Abspeichern aktuell zufließender Bildpunktdaten zur Verfügung. Die derart frei werdenden Speicherbereiche können durch entsprechende Schaltstufen zu einem Halbbildspeicher für das nächste Halbbild verknüpft werden, während noch Speichern und Auslesen, d.h. Überführen des aktuellen Halbbildes in das umgewandelte Signal erfolgt. Eine solche Anordnung benötigt nicht mehr zwei vollständig ausgebildete Halbbildspeicher, sondern nur wenig mehr als einen einzelnen Halbbildspeicher.

Auch bei dieser Ausgestaltung können die Speicherbereiche für sich wiederum als Schieberegister ausgeführt sein.

Eine weitere Verringerung des Speicherbedarfs kann dadurch erzielt werden, daß der Speicher als Halbbildspeicher mit wahlfreiem Zugriff ausgebildet ist und daß die umzuwandelnden Signalabschnitte je eines Halbbildes im Zeitmaßstab des vorgegebenen, insbesondere normgemäßen Fernsehsignals mit Hilfe des ersten Taktsignals gespeichert und wenigstens nahezu gleichzeitig beginnend mit Hilfe des zweiten Taktsignals im Zeitmaßstab des umgewandelten Signals ausgelesen werden. Die Verringerung des Speicherplatzes wird bei einer derartigen Anordnung mit einem sogenannten RAM durch einen gegenüber einem einfachen Schieberegister erhöhten Adressierungsaufwand erkauft. Insgesamt ergibt sich jedoch eine Verringerung des Schaltungsaufwandes und eine erhöhte Flexibilität beim Betrieb der Schaltungsanordnung.

Der in der Schaltungsanordnung zur Durchführung des erfindungsgemäßen Verfahrens eingesetzte Speicher kann bevorzugt auch als sogenannter FIFO-Speicher ausgebildet sein. Derartige Anordnungen, die bevorzugt zur Taktratenanpassung und damit zur Überführung von Signalen aus einem Zeitmaßstab in einen anderen Zeitmaßstab dienen, sind im Prinzip bekannt. Die Größe eines derartigen Speichers ist durch die zu speichernde Datenrate und die zu erzeugende größte Zeitverzögerung bestimmt.

Die Schaltungsanordnung zur Durchfuhrung des erfindungsgemäßen Verfahrens enthält bevorzugt weiterhin eine Detektionseinrichtung zum Detektieren von nicht durchgehend einen schwarzen Bildinhalt darstellenden Abschnitten des vorgegebenen, insbesondere normgemäßen Fernsehsignals als zu entnehmende Signalabschnitte. Eine derartige Detektionseinrichtung umfaßt insbesondere eine erste Vergleichsstufe zum Vergleichen des vorgegebenen, insbesondere normgemäßen Fernsehsignals mit einem Referenzpegel und Erkennen von wenigstens nahezu einen schwarzen Bildinhalt darstellenden Abschnitten des Fernsehsignals, eine erste Zeitstufe zum Unterdrücken des Einflusses von Synchron- und/oder Bezugssignalen im vorgegebenen, insbesondere normgemäßen Fernsehsignal auf die erste Vergleichsstufe, eine erste Zählvorrichtung zum Ermitteln der Anzahl von Zeilen in einem Halbbild des vorgegebenen, insbesondere normgemäßen Fernsehsignals, die wenigstens nahezu einen schwarzen Bildinhalt darstellen, eine zweite Vergleichsstufe zum Feststellen zeitlicher Änderungen der ermittelten Anzahl von Zeilen, eine zweite Zeitstufe zum Bilden eines von kurzzeitigen Schwankungen befreiten Maßsignals bzw. eines eine Information darüber gebenden Signals, daß ein umzuwandelndes Fernsehsignal vorliegt.

Durch eine derartige Anordnung läßt sich mit großer Störsicherheit eine präzise Detektion und ein stabiles Maßsignal erreichen.

Weitere Ausgestaltungen der Erfindung sind in den übrigen Unteransprüchen dargestellt.

Die Zeichnung zeigt einige Ausführungsformen der Erfindung. Darin stellt dar:

Fig. 1 ein Diagramm zur Überführung eines vorgegebenen Fernsehsignals in ein umgewandeltes Signal nach einer ersten Ausführungsform des erfindungsgemäßen Verfahrens und

Fig. 2 ein Diagramm zur Rückgewinnung des (ursprünglich) vorgegebenen Fernsehsignals gemäß der Ausführungsform nach Fig. 1,

Fig. 3 und 4 entsprechende Diagramme für ein zweites Ausführungsbeispiel des erfindungsgemäßen Verfahrens,

Fig. 5, 6 und 7 Zeitdiagramme zur Speicherbelegung bei drei weiteren Ausführungsbeispielen des erfindungsgemäßen Verfahrens,

Fig. 8 eine Schaltungsanordnung zur Durchführung des erfindungsgemäßen Verfahrens,

Fig. 9 einen stark schematisierten Ausschnitt aus dem zeitlichen Verlauf eines vorgegebenen Fernsehsignals und

Fig. 10 ein Ausführungsbeispiel für eine Detektionseinrichtung zum Einsatz in dem Ausführungsbeispiel nach Fig. 8.

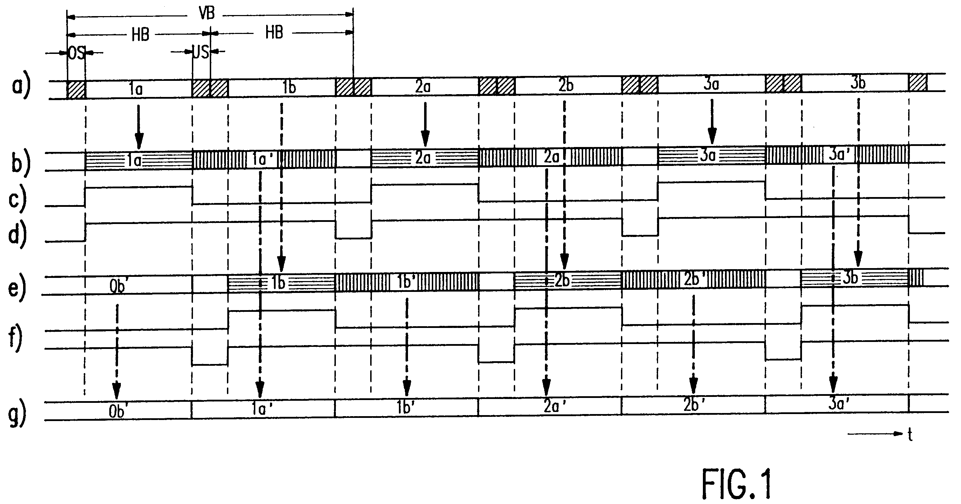

Im Diagramm nach Fig. 1 ist schematisch ein Ausführungsbeispiel des erfindungsgemäßen Verfahrens dargestellt, in dem ein Fernsehsignal vorgegeben ist, das gemäß Fig. 1a) aus einer Folge von Vollbildern VB besteht, die ihrerseits zwei nacheinander übertragene Halbbilder HB umfassen. Das derart vorgegebene Fernsehsignal kann insbesondere nach PAL-, der SECAM- oder NTSC-Norm ausgestaltet sein. Die einzelnen, dafür vorhandenen Signalanteile sind jedoch aus Gründen der Vereinfachung nicht dargestellt.

Das Ausführungsbeispiel nach Fig. 1 bezieht sich außerdem auf den Fall, daß mit dem vorgegebenen, insbesondere normgemäßen Fernsehsignal ein Kinofilm, insbesondere ein Breitwand-Kinofilm, übertragen wird, dessen auf eine Kinoleinwand zugeschnittenes Bildformat ein größeres Verhältnis zwischen Bildbreite und Bildhöhe aufweist als die Fernsehbilder des Fernsehsignals, d.h. als die aus je einem Vollbild VB des Fernsehsignals erzeugten Darstellungen auf einer Fernseh-Bildwiedergabeeinrichtung. Bei der Übertragung derartiger Kinofilme mittels Fernsehsendungen wird dann in der Regel am oberen und am unteren Rand des Fernsehbildes ein schwarz erscheinender Streifen freigelassen, damit wenigstens nahezu die vollständige Breite des Bildformats des Kinofilms zum Betrachter hin übertragen werden kann. Anderenfalls würden die seitlichen Ränder der Bilder des Kinofilms in einer Weise "abgeschnitten", die zu einer auffälligen und daher unerwünschten Beeinträchtigung des Eindrucks beim Betrachter führen würde. Die Übertragung der im Bild schwarz erscheinenden Streifen am oberen und unteren Bildrand erfolgt dadurch, daß in jedem der Halbbilder HB zu deren Beginn und Ende jeweils eine bestimmte Anzahl von Zeilen ein Bildsignal enthält, das ausschließlich dem Schwarzpegel entspricht. Diese Zeilen oder Zeilengruppen sind in Fig. 1a) mit Schrägschraffur hervorgehoben und durch OS für den oberen schwarzen Streifen und mit US für den unteren schwarzen Streifen im Fernsehbild bezeichnet. Die einzelnen Vollbilder VB des Fernsehsignals gemäß Fig. 1a) sind mit arabischen Ziffern durchnumeriert, die Halbbilder HB, die zu einem Vollbild VB gehören, mit a und b gekennzeichnet.

Bei der Durchführung des erfindungsgemäßen Verfahrens werden aus dem Fernsehsignal gemäß Fig. 1a) die nicht schraffiert dargestellten Signalabschnitte, die einer "mittleren" Zeilengruppe des Fernsehbildes entsprechen, entnommen und in einen ersten Halbbildspeicher eingelesen. Die zeitliche Belegung dieses ersten Halbbildspeichers ist schematisch in Fig. 1b) im gleichen zeitlichen Maßstab wie das Fernsehsignal der Fig. 1a) über der Zeit t aufgetragen. Dabei symbolisiert die waagerechte Schraffur den Einlesevorgang, und der mit einer dicken Vollinie gebildete Pfeil deutet die Übertragung der Signalabschnitte des ersten Halbbildes 1a des ersten dargestellten Vollbildes des Fernsehsignals in den ersten Halbbildspeicher an.

In entsprechender Weise wird das in Fig. 1a) mit 1b bezeichnete zweite Halbbild des Vollbildes 1 in einen zweiten Halbbildspeicher eingelesen, dessen Speicherbelegung über der Zeit in Fig. 1e) schematisch dargestellt ist. Der mit dicker, gestrichelter Linie ausgebildete Pfeil deutet diesen Einschreibvorgang an.

Nach Beendigung des Einlesens der den Halbbildern 1a und 1b entnommenen Signalabschnitte in die Halbbildspeicher erfolgt das Auslesen aus diesen Halbbildspeichern mit einem gedehnten Zeitmaßstab. Das Halbbild 1a, das innerhalb des durch waagerechte Schraffur gekennzeichneten Zeitintervalls in den ersten Halbleiterspeicher eingelesen wird, wird aus diesem während eines Zeitintervalls ausgelesen, das in Fig. 1b) durch senkrechte Schraffur markiert ist. Dieses Zeitintervall und damit der Zeitmaßstab des ausgelesenen Halbbildes, das nun mit 1a´ bezeichnet ist, ist derart gewählt, daß die in ihrem Zeitmaßstab umgewandelten Signalabschnitte nun das gesamte, dem ersten Halbbild des ersten Vollbildes zur Verfügung stehende Zeitintervall ausfüllen. Das Halbbild 1a´ bzw. die aus dem Halbbild 1a entnommenen und umgewandelten Signalabschnitte werden nun - angedeutet durch einen strichpunktierten Pfeil - in diesem neuen Zeitmaßstab einem Aufzeichnungsträger, insbesondere einem Videoband, zugeführt, dessen zeitliche Belegung in Fig. 1g) angedeutet ist. Sie füllen dort den mit 1a´ bezeichneten Raum bzw. das zugeordnete Zeitintervall vollständig aus.

Entsprechend wird auch das in seinem Zeitmaßstab umgewandelte zweite Halbbild 1b' bzw. die umgewandelten, dem zweiten Halbbild 1b entnommenen Signalabschnitte aus dem zweiten Halbbildspeicher ausgelesen und dem Aufzeichnungs- oder Übertragungsmedium zugeführt. Auf diesem entsteht dann die in Fig. 1g) dargestellte, lückenlose Folge umgewandelter Signale der einzelnen, aufeinanderfolgenden Halbbilder.

Durch die zeitliche Dehnung der dem Fernsehsignal gemäß Fig. 1a) entnommenen Signalabschnitte werden die durch die oberen und unteren schwarzen Streifen OS, US entstehenden zeitlichen Lücken zwischen den einen für die Darstellung wichtigen Bildinhalt umfassenden Signalabschnitten geschlossen und somit das Medium besser genutzt. Dadurch wird bei einem Medium mit gegenüber dem Fernsehsignal begrenzter Frequenzcharakteristik eine Erhöhung der vom Medium übertragbaren bzw. aufzeichenbaren oberen Frequenzgrenze, bezogen auf den Zeitmaßstab des vorgegebenen, insbesondere normgemäßen Fernsehsignals, erzielt.

In Fig. 1 sind für die beiden Halbbildspeicher zur ergänzenden Erläuterung noch je zwei weitere Kurvenverläufe eingetragen. Fig. 1c) zeigt ein Schreib-Lese-Signal für den Speicher 1, Fig. 1d) ein Aktivierungssignal für diesen Speicher. Durch diese Signale wird die Betriebsart des Speichers 1 gesteuert. Befindet sich das Aktivierungssignal nach Fig. 1d) auf einem hohen Pegel, wird der erste Halbbildspeicher in Betrieb gesetzt. Bei einem niedrigen Pegel des Aktivierungssignals nach Fig. 1d) ist der Halbbildspeicher außer Funktion, d.h. er reagiert in diesem Betriebszustand nicht auf ihm zugeführte Daten oder Taktsignale. Bei einem hohen Pegel des Schreib-Lese-Signals nach Fig. 1c) ist der Halbbildspeicher auf die Betriebsart des Einspeicherns, bei niedrigem Pegel auf die Betriebsart des Auslesens geschaltet. Entsprechende Signalverläufe für den zweiten halbbildspeicher finden sich in Fig. 1f).

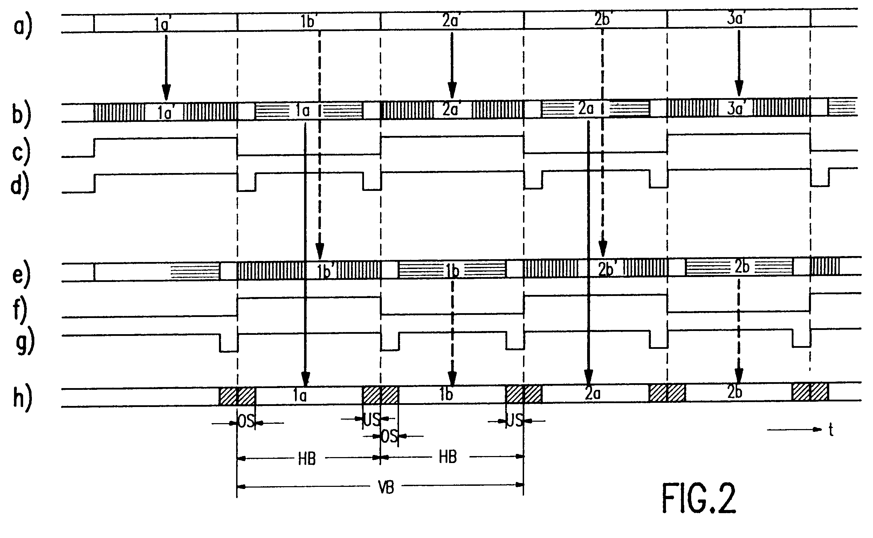

Fig. 2 zeigt schematisch den Ablauf der Rückgewinnung des ursprünglich vorgegebenen, insbesondere normgemäßen Fernsehsignals der Fig. 1a) aus dem umgewandelten Signal, wie es gemäß Fig. 1g) dem Medium zugeführt und aus diesem wieder entnommen wird. Die zeitliche Anordnung des den einzelnen Halbbildern zugeordneten, umgewandelten Signals auf dem Medium, beispielsweise einem Aufzeichnungsträger, gemäß Fig. 1g) ist in Fig. 2a) wiedergegeben. In Fig. 2b) findet sich in zu Fig. 1 entsprechender Darstellung die zeitliche Belegung des ersten Halbbildspeichers mit den für die Überführung des umgewandelten Signals in die dem ursprünglich vorgegebenen, insbesondere normgemäßen Fernsehsignal entnommenen Signalabschnitte. Das umgewandelte Signal 1a´ des ersten Halbbildes wird in dem ihm zugehörigen Zeitmaßstab im ersten Halbbildspeicher gespeichert. Das Zeitintervall, in dem dieser Vorgang abläuft, ist durch senkrechte Schraffur hervorgehoben. Ein dem ersten Halbbildspeicher zuzuführendes Aktivierungssignal gemäß Fig. 2d) befindet sich dabei zur Wirksamschaltung des Halbbildspeichers auf hohem Pegel. Durch einen hohen Pegel zeigt außerdem ein in Fig. 2c) dargestelltes Schreib-Lese-Signal, daß der erste Halbbildspeicher auf die Betriebsart "Speichern" gesteuert wird.

Im nachfolgenden Zeitintervall, d.h. innerhalb des Zeitintervalls, das durch das umgewandelte Signal des nächsten Halbbildes 1b' im Medium beansprucht wird, erfolgt dann aus dem ersten Halbleiterspeicher ein Auslesen im Zeitmaßstab des ursprünglich vorgegebenen Fernsehsignals, d.h. zeitlich gestaucht. Der Zeitraum, in dem dieses Auslesen stattfindet, ist in Fig. 2b) durch eine waagerechte Schraffur hervorgehoben. Durch den zeitlich komprimierten Auslesevorgang entstehen somit die dem ersten Halbbild 1a des ursprünglich vorgegebenen Fernsehsignals entnommenen Signalabschnitte, in Fig. 2 mit 1a bezeichnet. In dem Zeitintervall, in dem dieses Auslesen vorgenommen wird, befindet sich das Schreib-Lese-Signal nach Fig. 2c) auf niedrigem Pegel entsprechend seiner Stellung für den Lesebetrieb. Das Aktivierungssignal nach Fig. 2d) wird nur während des Zeitintervalls auf hohen Pegel geschaltet, das den rückzugewinnenden Signalabschnitten des ursprünglich vorgegebenen Fernsehsignals entspricht. Während der übrigen Signalabschnitte bzw. der zugehörigen Zeitintervalle, die mit einem Füllsignal ausgefüllt werden, befindet sich das Aktivierungssignal nach Fig. 2d) auf niedrigem Potential.

Die entsprechenden Vorgänge für den zweiten Halbbildspeicher sind in den Fig. 2e), f) und g) dargestellt, wobei mit dem zweiten Halbbildspeicher jeweils das zweite Halbbild eines Vollbildes aus dem umgewandelten Signal in die vorbestimmten Signalabschnitte des ursprünglich vorgegebenen Fernsehsignals überführt wird.

Fig. 2h zeigt das rückgewonnene Fernsehsignal, das dem ursprünglich vorgegebenen Fernsehsignal entspricht. Die darin jetzt wieder vorhandenen Zeilengruppen OS und US, die im Fernsehbild den oberen bzw. den unteren schwarzen Streifen bilden, sind durch Einfügung eines Füllsignals mit einem dem Schwarzpegel des Fernsehsignals entsprechenden Bildinhalt erzeugt worden. Dieses Signal kann dann zur Darstellung für einen Betrachter einer Bildwiedergabeeinrichtung zugeleitet werden.

Bei dem vorstehend beschriebenen Ausführungsbeispiel umfassen die dem ursprünglichen, insbesondere normgemäßen Fernsehsignal zu entnehmenden Signalabschnitte nur die einen Bildinhalt des Kinofilms enthaltenden Zeilen des Fernsehbildes, so daß nur der Bildinhalt dieses Kinofilms dem Medium, insbesondere einem Aufzeichnungsträger, zugeführt und auch von diesem zurückgewonnen wird. Das beschriebene Verfahren ist jedoch für jeden beliebigen Bildinhalt anwendbar, so daß beispielsweise aus einem normgemäßen Fernsehsignal mit einem deren gesamtes Bildformat ausfüllenden Bildinhalt vorbestimmte Teile herausgegriffen und über das Medium mit höherer Auflösung geleitet oder aufgezeichnet werden können. Bei der Rückgewinnung würden dann die ausgewählten Ausschnitte des Bildes mit höherer Auflösung erscheinen, während die übrigen Teile des Bildes beispielsweise als schwarze Berandung auftreten. In Fortführung einer derartigen Ausgestaltung des erfindungsgemäßen Verfahrens könnte dann daran gedacht werden, die Abmessungen des Bildausschnitts zu vergrößern und damit an die Abmessungen der benutzten Bildwiedergabeeinrichtung anzupassen. Damit ist eine Darstellung mit sogenanntem Zoom-Effekt ohne Schärfeeinbuße erreichbar.

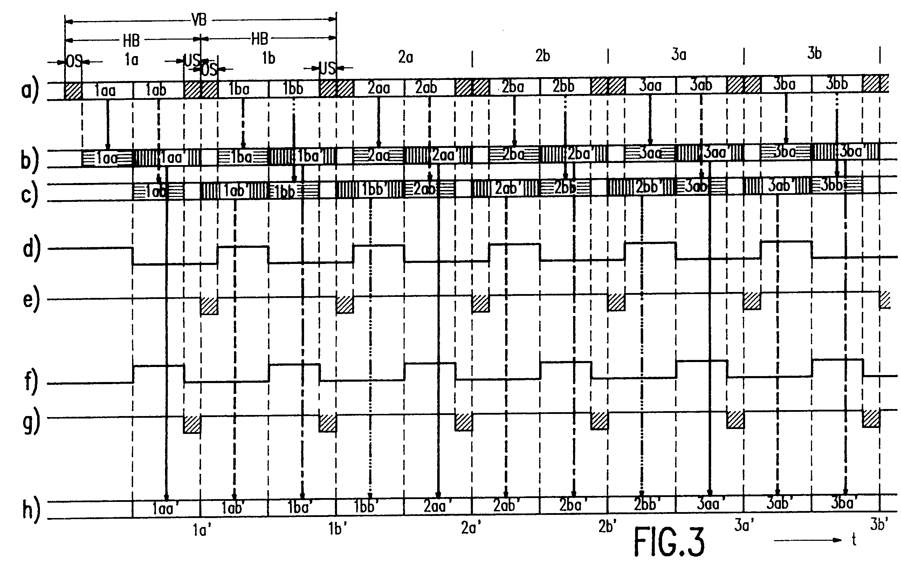

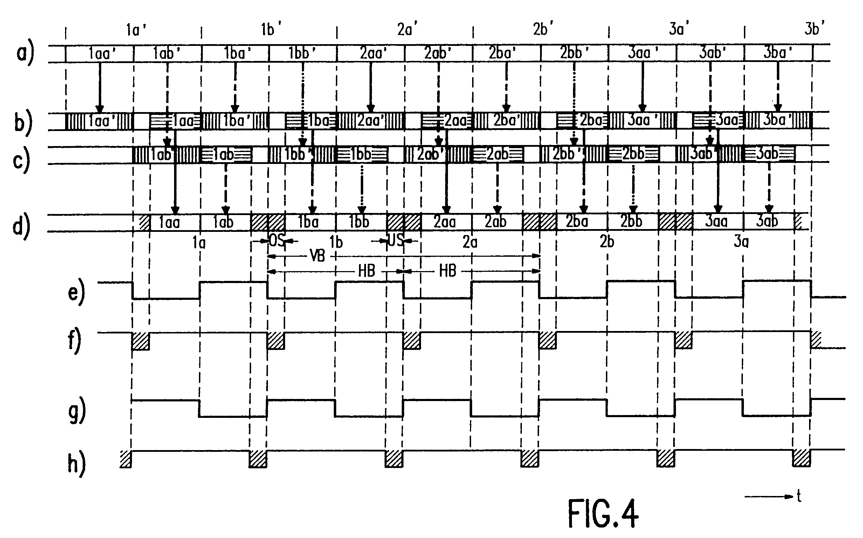

Die Fig. 3 und 4 zeigen eine Abwandlung des in den Fig. 1 und 2 dargestellten Ausführungsbeispiels des erfindungsgemäßen Verfahrens. Mit den Fig. 1 und 2 übereinstimmende Teile der Diagramme nach den Fig. 3 und 4 sind mit übereinstimmenden Bezeichnungen versehen. Im Gegensatz zu dem Ausführungsbeispiel nach Fig. 1 und 2 werden bei dem Ausführungsbeispiel nach Fig. 3 und 4 die einzelnen Halbbilder bzw. die diesen zu entnehmenden Signalabschnitte 1a, 1b, usw., in je zwei gleich lange
Abschnitte 1aa, 1ab, 1ba, 1bb, usw. aufgeteilt. Das derart aufgeteilte, vorgegebene, insbesondere normgemäße Fernsehsignal ist durch die Darstellung nach Fig. 3a) über der Zeit t schematisch dargestellt.

Fig. 3b) und c) zeigen schematisch die Abläufe des Speicherns und Auslesens in dem dieser Ausführungsform des erfindungsgemäßen Verfahrens angepaßten Speicher. Dieser umfaßt zwei Speicherbereiche. Für den ersten Speicherbereich ist in Fig. 3b), für den zweiten Speicherbereich in Fig. 3c) der Betriebsablauf schematisch wiedergegeben. Der erste Abschnitt 1aa der dem ersten Halbbild entnommenen Signalabschnitte 1a wird im ersten Speicherbereich abgespeichert. Das zugehörige Zeitintervall ist in Fig. 3b) mit waagerechter Schraffur markiert. Am Ende dieses Abschnittes, d.h. in der Mitte des Halbbildes 1a, wird der zweite Speicherbereich zum Speichern der zweiten Hälfte der dem ersten Halbbild 1a zu entnehmenden Signalabschnitte aktiviert. Wie in Fig. 3c) angedeutet, wird das zugehörige Fernsehsignal, bezeichnet als Abschnitt 1ab, im zweiten Speicherbereich gespeichert. Dieses Zeitintervall ist in Fig. 3c) ebenfalls mit waagerechter Schraffur hervorgehoben. Gleichzeitig werden die im ersten Speicherbereich gespeicherten Signalabschnitte 1aa des Halbbildes 1a bereits mit verändertem Zeitmaßstab aus dem ersten Speicherbereich ausgelesen und dem Aufzeichnungsträger als Signalabschnitt 1aa' zugeführt. Nach Beendigung dieses Auslesevorgangs wird unmittelbar anschließend auch der zweite Speicherbereich ausgelesen, wobei als Zeitmaßstab derselbe wie beim Auslesen des ersten Speicherbereichs dient. Diese als 1ab' bezeichneten Signalabschnitte des umgewandelten Signals werden ohne Zwischenraum auf dem Aufzeichnungsträger an die voraufgehenden Signalabschnitte des umgewandelten Signals - 1aa´ - angefügt. Der Signalfluß der Abschnitte 1aa ist mit in Vollinie dargestellten Pfeilen, der Signalfluß der Abschnitte 1ab mit in gestrichelter Linie dargestellten Pfeilen angedeutet. Auf dem Aufzeichnungsträger ergibt sich die in Fig. 3h) dargestellte Signalfolge. Die Signalabschnitte im Zeitmaßstab des umgewandelten Signals sind auch in Fig. 3 durch senkrechte Schraffur hervorgehoben.

In entsprechender Weise werden die beiden Abschnitte 1ba und 1bb des zweiten Halbbildes 1b des ersten Vollbildes über die Speicherbereiche in Abschnitte des umgewandelten Signals überführt und auf dem Aufzeichnungsträger aufgezeichnet als Abschnitte 1ba' bzw. 1bb'. Der Signalfluß hierfür ist durch verschiedenartig strichpunktierte Pfeile symbolisiert.

In Fig. 3d) ist ein Schreib-Lese-Signal für den ersten Speicherbereich, in Fig. 3f) ein solches für den zweiten Speicherbereich wiedergegeben. Dabei bedeutet ein hoher Pegel des Schreib-Lese-Signals wie in Fig. 1c) eine Einstellung auf die Betriebsart "Abspeichern", ein niedriger Signalpegel eine Einstellung auf "Auslesen". Die Fig. 3e) und 3g) zeigen Aktivierungssignale für den ersten bzw. den zweiten Speicherbereich in der Darstellung wie Fig. 1d). Dabei bedeutet ein hoher Signalpegel einen aktiven Zustand der Speicherbereiche, während durch einen niedrigen Signalpegel der Aktivierungssignale die Speicherbereiche außer Betrieb gesetzt werden; dabei bleiben jedoch die gespeicherten Signale erhalten, lediglich das Speichern und Auslesen wird unterbrochen. Diese Zeitintervalle sind in den Fig. 3b) und 3c) als nicht schraffierte Felder dargestellt.

Fig. 4 zeigt die Rückgewinnung des umgewandelten Signals vom Aufzeichnungsträger in der zu Fig. 3 gehörenden Ausführungsform des Verfahrens von einem gemäß Fig. 3h) bzw. Fig. 4a) bespielten Aufzeichnungsträger. Dabei wird der erste Abschnitt 1aa' des umgewandelten Signals 1a' des ersten Halbbildes im Zeitmaßstab des umgewandelten Signals im ersten Speicherbereich gespeichert und nach einem Zeitintervall, das dem oberen schwarzen Streifen OS des rückzugewinnenden, ursprünglich vorgegebenen Fernsehsignals entspricht, im Zeitmaßstab des vorgegebenen Fernsehsignals als Signalabschnitt 1aa des ersten Halbbildes 1a des ursprünglichen Fernsehsignals wieder ausgelesen. Der zweite Abschnitt 1ab' des ersten Halbbildes 1a' wird im Zeitmaßstab des umgewandelten Signals in den zweiten Speicherbereich eingespeichert und unmittelbar anschließend im Zeitmaßstab des vorgegebenen Fernsehsignals als zweiter Abschnitt 1ab dessen ersten Halbbildes 1a wieder ausgelesen. Die Signalübertragungen sind in Fig. 4 durch in Vollinie bzw. gestrichelter Linie ausgeführte Pfeile symbolisiert.

Während des Auslesens des Abschnitts 1ab aus dem zweiten Speicherbereich wird in den ersten Speicherbereich bereits der erste Abschnitt 1ba' des umgewandelten Signals 1b' des zweiten Halbbildes des ersten Vollbildes entsprechend dem strichpunktierten Pfeil eingespeichert, usw.

Beim Auslesen der Abschnitte 1aa, 1ab, 1ba, 1bb usw. im Zeitmaßstab des ursprünglich vorgegebenen Fernsehsignals, der gegenüber dem Zeitmaßstab des umgewandelten Signals gestaucht ist, werden die "freibleibenden" Zeitintervalle zwischen den einzelnen Halbbildern 1a, 1b, usw., die den oberen und unteren schwarzen Streifen des wiederzugebenden Fernsehbildes entsprechen, mit einem Füllsignal ausgefüllt; vorzugsweise entspricht dieses Füllsignal dem Schwarzpegel des Fernsehsignals. In Fig. 4d) ist die zeitliche Anordnung des rückgewonnenen Fernsehsignals schematisch dargestellt, wobei die mit einem Füllsignal gefüllten Zeitintervalle OS und US durch Schrägschraffur markiert sind.

Die Fig. 4e) bis h) zeigen schematisch die zeitlichen Verläufe der Schreib-Lese-Signale und der Aktivierungssignale für die beiden Speicherbereiche bei deren Betrieb gemäß Fig. 4b) und 4c). Die Darstellungsweise entspricht derjenigen nach den Fig. 1 bis 3. Fig. 4e) stellt das Schreib-Lese-Signal für den ersten Speicherbereich, Fig. 4g) dasjenige für den zweiten Speicherbereich dar. Im Vergleich zu den Schreib-Lese-Signalen für den ersten und den zweiten Halbbildspeicher gemäß Fig. 2c) bzw. 2f) macht sich der verringerte Speicherplatz der einzelnen Speicherbereiche gegenüber einem vollständigen Halbbildspeicher durch einen schnelleren Wechsel der Signalpegel bemerkbar. Entsprechendes gilt für die Aktivierungssignale nach den Fig. 4f) und 4h) im Vergleich zu denjenigen der Halbbildspeicher nach den Fig. 2d) und 2g).

Die vorstehend beschriebenen Ausführungsformen des erfindungsgemäßen Verfahrens gemäß den Fig. 1 bis 4 können bevorzugt mit als Schieberegister ausgebildeten Halbbildspeichern bzw. Speicherbereichen durchgeführt werden, da die zu speichernden Signale in unveränderter Reihenfolge wieder ausgelesen werden und das Abspeichern einerseits und das Auslesen andererseits stets voneinander getrennte Speicher bzw. Speicherbereiche betrifft. Während durch die Ausgestaltung des Verfahrens nach den Fig. 3 und 4 gegenüber den Fig. 1 und 2 eine wesentliche Verminderung des benötigten Speicherplatzes erzielt werden kann, kann mit einem Verfahren gemäß den Fig. 1 und 2 auf eine Speicherstruktur zurückgegriffen werden, die ggf. auch für andere Verfahren zur Bildverbesserung u.dgl. in einem Gerät bereits vorhanden ist oder eingesetzt werden kann. Das erfindungsgemäße Verfahren läßt sich in diesem Fall ohne größeren, zusätzlichen schaltungstechnischen Aufwand verwirklichen.

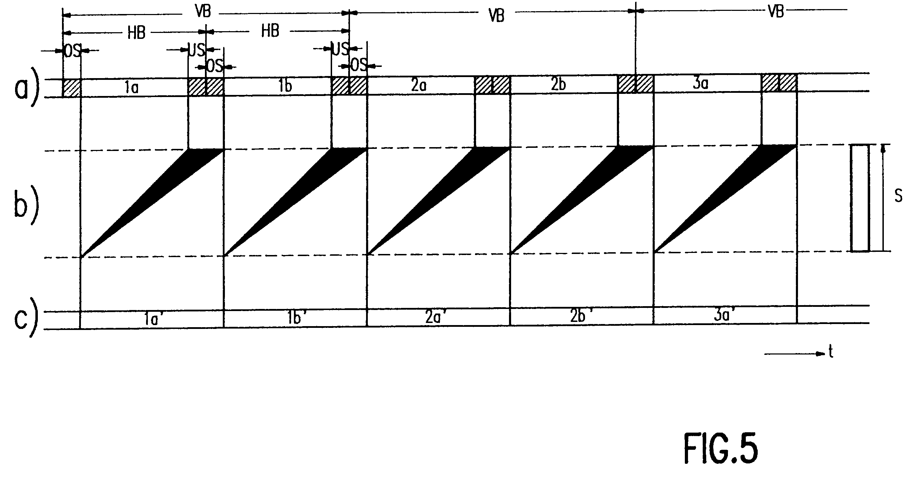

Demgegenüber sind in den Fig. 5 bis 7 drei Ausführungsformen des erfindungsgemäßen Verfahrens für die Verwendung einer Speicheranordnung dargestellt, die ein gleichzeitiges Speichern und Auslesen nach bzw. von beliebigen Speicherplätzen gestattet. Fig. 5 zeigt eine einfache Ausführungsform des Verfahrens für einen derartigen Speicher mit wahlfreiem Zugriff (sogenanntes RAM), dessen Speicherumfang dem eines der Halbbildspeicher nach Fig. 1 oder 2 entspricht. Für die Fig. 5 ist eine vereinfachte Darstellung gewählt, die in Fig. 5a) die bereits erläuterte Einteilung der Voll- und Halbbilder des vorgegebenen, insbesondere normgemäßen Fernsehsignals über der Zeit t zeigt. In Fig. 5c) findet sich entsprechend die Darstellung des umgewandelten Signals mit den Halbbildern 1a', 1b', usw.

Fig. 5b) zeigt schematisch die zeitliche Abfolge des Speicherns und Auslesens der in das umgewandelte Signal zu überführenden Signalabschnitte des vorgegebenen Fernsehsignals in die bzw. aus der Speicheranordnung S. Die geschwärzten Dreiecke symbolisieren dabei die Belegung der einzelnen Speicherzellen der Speicheranordnung S, die rechts in Fig. 5b) symbolisch angedeutet ist. Der Pfeil deutet dabei die Reihenfolge der Adressierung der einzelnen Speicherplätze der Speicheranordnung an. Die die geschwärzten Dreiecke oben und unten begrenzenden, gestrichelten Linien stehen als Symbol für die erste und die letzte Speicherzelle innerhalb der Adressierung.

Wird nun von jedem Zeitpunkt des Diagramms nach Fig. 5a) entsprechend einem ausgewählten Bildpunkt des zu überführenden Signalabschnitts beispielsweise des ersten, dargestellten Halbbildes 1a des vorgegebenen Fernsehsignals ein Lot gefällt, schneidet dies die obere, diagonale Begrenzungslinie des geschwärzten Dreiecks an einem bestimmten Punkt, der einem bestimmten Punkt auf der durch den Pfeil am Symbol für die Speicheranordnung S angedeuteten Adressenskala der Speicheranordnung S entspricht. Das Signal des zugeordneten Bildpunktes soll bei der vorliegenden Ausführungsform des Verfahrens in der derart markierten Speicherzelle der Speicheranordnung S gespeichert werden. Wird nun parallel zur Zeitachse t durch das geschwärzte Dreieck eine Linie gezogen, schneidet diese die untere diagonale Begrenzungslinie des geschwärzten Dreiecks an einem weiteren Punkt, der auf der Zeitachse t dem Zeitpunkt entspricht, zu dem das Signal des Bildpunktes auf dem Aufzeichnungsträger gemäß Fig. 5c) aufgezeichnet werden soll. Die zunehmende Ausdehnung des geschwärzten Dreiecks zum Ende des betrachteten Halbbildes hin symbolisiert dann eine zunehmende Verzögerung der einzelnen Bildpunkte bei der Überführung des betrachteten Halbbildes. Während der erste Bildpunkt des Halbbildes unmittelbar, d.h. praktisch ohne Verzögerung, dem Aufzeichnungsträger zugeführt wird, wird der letzte Bildpunkt des dem vorgegebenen Fernsehsignals entnommenen Signalabschnitts des Halbbildes um die größte auftretende Verzögerungszeit verzögert, und zwar um die Summe der Zeitdauern der Streifen OS und US. Da unmittelbar auf diesen letzten Bildpunkt der erste Bildpunkt des nächsten Halbbildes bzw. des daraus entnommenen Signalabschnitts anschließt, wird auf dem Aufzeichnungsträger gemäß Fig. 5c) eine lückenlose Aufzeichnung der entnommenen und in ihrem Zeitmaßstab gedehnten Signalabschnitte erhalten.

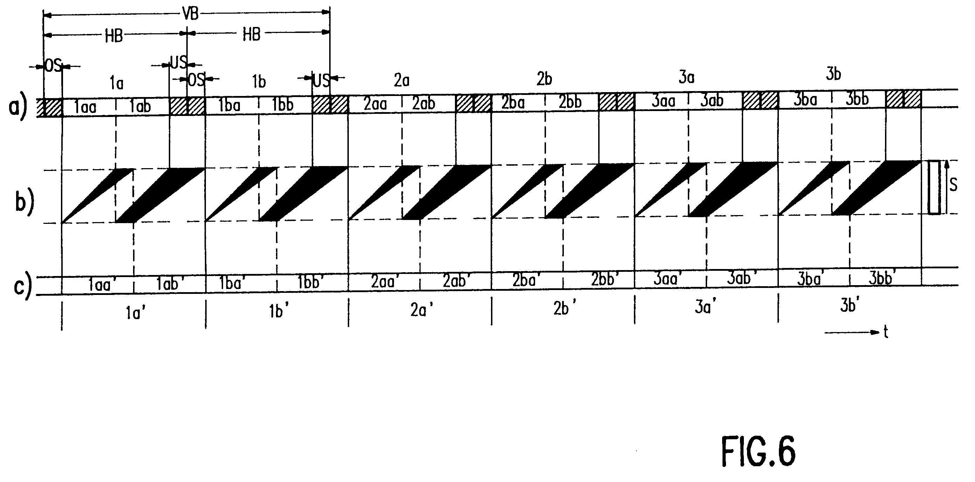

In der Darstellung nach Fig. 5b) stellen somit die geschwärzten Dreiecke diejenigen Adressen-Zeit-Flächen dar, durch die die Zwischenspeicherung bzw. die Verzögerung der einzelnen Bildpunkte und damit eine relevante Belegung der zugeordneten Speicherzellen symbolisiert wird. Die übrigen, weißen Flächen im Diagramm nach Fig. 5b) symbolisieren Zeitintervalle, in denen die Speicheranordnung S ungenutzt bleibt. In Fig. 6 ist daher eine Abwandlung der Ausführung des Verfahrens nach Fig. 5 dargestellt, die eine Halbierung des Speicherumfangs der Speicheranordnung S bei verbesserter Ausnutzung über der Zeit t ermöglicht. Wie in den Ausführungen gemäß Fig. 3 und 4 wird dabei jedes der Halbbilder in zwei Abschnitte unterteilt, deren Bezeichnungen mit denen nach Fig. 3 und 4 übereinstimmend gewählt sind. In die Speicheranordnung S wird bei dem Verfahren nach Fig. 6 zunächst der erste Abschnitt 1aa des ersten Halbbildes 1a eingespeichert und - unverzüglich mit dem Einspeichern beginnend - mit dem Zeitmaßstab des umgewandelten Signals wieder ausgelesen. Unmittelbar im Anschluß an das Einspeichern des letzten Bildpunktes des ersten Abschnittes 1aa in die letzte Speicherzelle wird in die erste Speicherzelle der erste Bildpunkt des zweiten Abschnittes 1ab eingelesen, da diese Speicherzelle inzwischen keinen bedeutsamen Inhalt mehr hat. Das Auslesen zur Bildung des umgewandelten Signals 1a' des ersten Halbbildes eilt wie in Fig. 5 dem Einspeichern des Signalabschnitts des vorgegebenen Fernsehsignals (1a) mit immer größer werdender Verzögerung nach, die bei Erreichen des letzten Bildpunktes des Halbbildes 1a gerade wieder die Summe der den Streifen US und OS entsprechenden Zeitintervalle ausmacht.

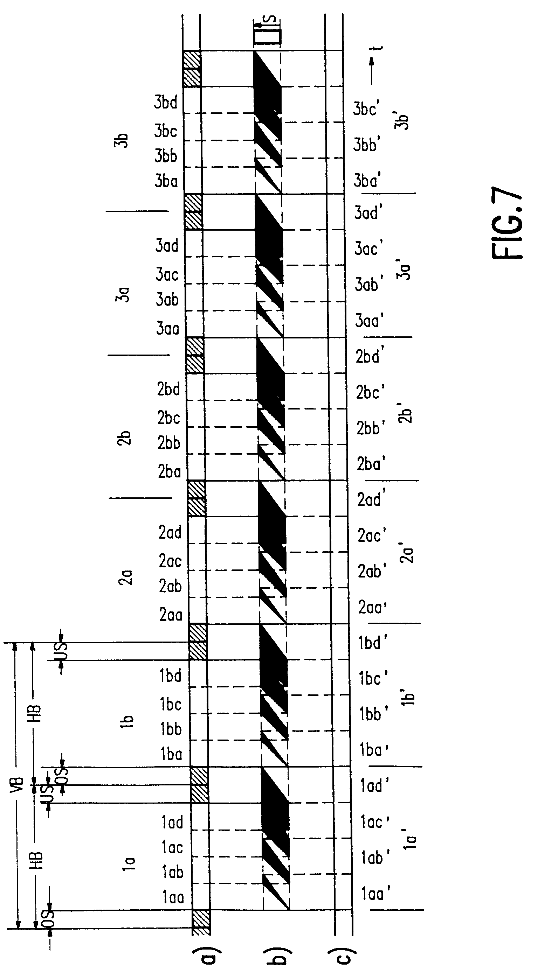

Auch in Fig. 6b) sind noch weite, ungeschwärzte Adressen-Zeit-Flächen erkennbar. Daher läßt sich eine weitere Verringerung des Speicherumfangs vornehmen, in dem die einzelnen Halbbilder 1a, 1b, usw. in eine noch größere Anzahl von Abschnitten unterteilt werden. Den Grenzfall des aus Fig. 5 abgeleiteten Beispiels des erfindungsgemäßen Verfahrens zeigt die Fig. 7. Jedes der Halbbilder bzw. der ihm zu entnehmenden Signalabschnitte 1a, 1b, usw. ist in vier Abschnitte unterteilt, die mit 1aa, 1ab, 1ac, 1ad usw. bezeichnet sind. Die Speicheranordnung S wird entsprechend in jedem Halbbild zyklisch vierfach belegt. Der Grenzfall ist dann erreicht, wenn die Zeitspanne zwischen dem Auslesen einer Speicherzelle und dem Einlesen des nächsten Wertes in diese Speicherzelle verschwindet. Dies ist in Fig. 7b) der Fall zwischen dem Auslesen des letzten Bildpunktes des dritten Abschnittes (Endbuchstabe c) und dem Einspeichern des ersten Bildpunktes des vierten Abschnittes (Endbuchstabe d) des jedem Halbbild entnommenen Signalabschnitts 1a, 1b, usw. Gegenüber der Ausführung nach Fig. 5 läßt sich bei der Ausgestaltung des Verfahrens nach Fig. 7 eine Reduktion des Speicherumfangs auf ein Viertel erzielen.

Die Funktion für die Beispiele nach den Fig. 5 bis 7 läßt sich bevorzugt mit sogenannten FIFO-Speichern verwirklichen. Aus diesen Diagrammen läßt sich dann unmittelbar der für einen solchen Speicher benötigte Speicherumfang entnehmen.

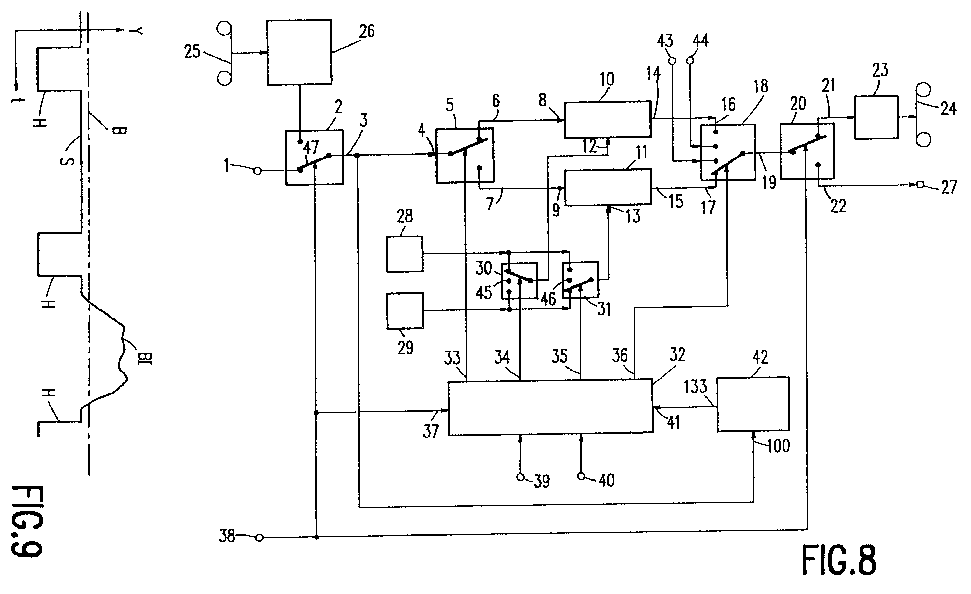

Fig. 8 zeigt ein Ausführungsbeispiel einer Schaltungsanordnung zur Durchführung des erfindungsgemäßen Verfahrens, d.h. zur wahlweisen Überführung eines vorgegebenen, insbesondere normgemäßen Fernsehsignals in ein umgewandeltes Signal durch zeitliche Expansion ausgewählte Bildinhalte umfassender Signalabschnitte und umgekehrt durch zeitliche Kompression des umgewandelten Signals zur Rücküberführung in das ursprünglich vorgegebene, insbesondere normgemäße Fernsehsignal. Sowohl das vorgegebene Fernsehsignal als auch das umgewandelte Signal können in analoger oder auch digitaler Form vorliegen.

Der Einfachheit halber bezieht sich das nachfolgend beschriebene Beispiel auf die Umwandlung des Luminanzanteils im Fernsehsignal. Dieses wird über einen Eingangsanschluß 1 einem Eingangsumschalter 2 zugeführt, von dessen Ausgang 3 es dem Eingang 4 eines Speicherwahlschalters 5 zugeleitet wird. Durch den Speicherwahlschalter 5 kann das Fernsehsignal wechselweise einem von zwei Ausgängen 6, 7 zugeleitet werden. Mit den Ausgängen 6, 7 sind die Eingänge 8, 9 eines ersten bzw. eines zweiten Halbbildspeichers 10 bzw. 11 verbunden. Die Halbbildspeicher 10, 11 sind als Schieberegister ausgebildet, die über Takteingängen 12, 13 zugeführte Taktsignale getaktet werden können. An Ausgängen 14, 15 werden die in den Halbbildspeichern 10, 11 gespeicherten Fernsehsignale bzw. Signalabschnitte abgegeben und einem ersten bzw. zweiten Eingang 16 bzw. 17 eines Signalwahlschalters 18 zugeführt. Von dessen Ausgang 19 gelangen die von den Halbbildspeichern 10, 11 abgegebenen Signale über einen Ausgangsumschalter 20 an dessen ersten Ausgang 21 und von dort weiter über eine FM-Modulationsstufe 23 auf einen Aufzeichnungsträger 24, beispielsweise ein Video-Magnetband.

Während der vorstehend dargestellte Signalweg für die Überführung des vorgegebenen, insbesondere normgemäßen Fernsehsignals in das umgewandelte Signal durchlaufen wird und die Schalterstellungen des Eingangsumschalters 2 und des Ausgangsumschalters 20 auch für diesen Betriebsfall dargestellt sind, wird beim Rücküberführen das umgewandelte Signal einem Aufzeichnungsträger 25 entnommen. Der Aufzeichnungsträger 25 kann mit dem Aufzeichnungsträger 24 identisch sein, für die Beschreibung des Ausführungsbeispiels sind jedoch unterschiedliche Bezugszeichen gewählt worden, damit der Aufzeichnungsträger 24 im Betriebsfall der Aufnahme des umgewandelten Signals von der Betriebsart des Aufzeichnungsträgers 25, d.h. der Wiedergabe des umgewandelten Signals, unterscheidbar ist. Vom Aufzeichnungsträger 25 gelangt das umgewandelte Signal über eine FM-Demodulationsstufe 26 auf den Eingangsumschalter 2. Dessen Schaltzunge 47 muß dann in die nicht dargestellte Stellung gebracht werden. Das umgewandelte Signal kann dann von der FM-Demodulationsstufe 26 über den Ausgang 3 des Eingangsumschalters 2 und den Speicherwahlschalter 5 den Halbbildspeichern 10, 11 zugeleitet und aus diesen über den Signalwahlschalter 18 und dessen Ausgang 19 dem Eingangsumschalter 20 zugeführt werden. Auch der Ausgangsumschalter 20 befindet sich jetzt in der nicht dargestellten Schaltposition, so daß das Fernsehsignal vom Ausgang 19 des Signalwahlschalters 18 einem zweiten Ausgang 22 des Ausgangsumschalters 20 zugeleitet wird. Der zweite Ausgang 22 ist mit einem Ausgangsanschluß 27 verbunden, von dem das Fernsehsignal in seiner ursprünglich vorgegebenen, insbesondere normgemäßen Form zur weiteren Verarbeitung und/oder Darstellung auf einer Bildwiedergabeanordnung, z.B. einem Bildschirm abgegriffen werden kann.

Die Halbbildspeicher 10, 11, die als Schieberegister ausgebildet sind, werden zum Überführen der dem vorgegebenen, insbesondere normgemäßen Fernsehsignal entnommenen Signalabschnitte in das umgewandelte Signal abwechselnd mit einem ersten und einem zweiten Taktsignal getaktet, die zwei Oszillatoren 28, 29 entnommen werden. Dabei wird das ursprünglich vorgegebene Fernsehsignal mit einem vom ersten Oszillator 28 gelieferten, ersten Taktsignal mit einer ersten Frequenz getaktet, und zwar für das Überführen in das umgewandelte Signal beim Einspeichern in die Halbbildspeicher 10, 11 und für das Rücküberführen in das ursprünglich vorgegebene Fernsehsignal beim Auslesen aus den Halbbildspeichern 10, 11. Der zweite Oszillator 29 liefert ein zweites Taktsignal mit einer zweiten Frequenz, mit der die Halbbildspeicher 10, 11 zum Speichern bzw. Auslesen des umgewandelten Signals getaktet werden. Das Verhältnis der ersten zur zweiten Frequenz ist abhängig von der zeitlichen Dehnung bzw. Kompression der dem ursprünglich vorgegebenen Fernsehsignal entnommenen Signalabschnitte, hängt also beispielsweise von der Breite der oberen und unteren schwarzen Streifen OS bzw. US im Fernsehbild ab. Zur exakten Einhaltung dieses Frequenzverhältnisses können die Oszillatoren 28, 29 beispielsweise mit einem Phasenregelkreis verkoppelt sein, die Frequenzen können aber auch fest eingestellt werden. Beispielsweise können zwei unabhängig voneinander fest einstellbare Quarzoszillatoren verwendet werden, die Frequenzen der Oszillatoren 28, 29 können jedoch auch aus einem gemeinsamen Quarznormal abgeleitet und durch entsprechende Teiler auf das gewünschte Frequenzverhältnis eingestellt werden. Vorzugsweise beträgt die erste Frequenz zum Einspeichern und Auslesen des vorgegebenen, insbesondere normgemäßen Fernsehsignals etwa das Drei- bis Vierfache der Farbträgerfrequenz des vorgegebenen Fernsehsignals.

Im Betrieb der Schaltungsanordnung müssen die Taktsignale der Oszillatoren 28, 29 abwechselnd den Takteingängen 12, 13 der Halbbildspeicher 10, 11 zugeführt werden. Zu diesem Zweck sind zwei Taktsignalumschalter 30, 31 in die Zuleitungen zwischen den Oszillatoren 28, 29 und den Takteingängen 12, 13 eingefügt, durch die die Taktsignale für die Takteingänge 12, 13 wechselweise von den Oszillatoren 28 bzw. 29 ausgewählt werden.

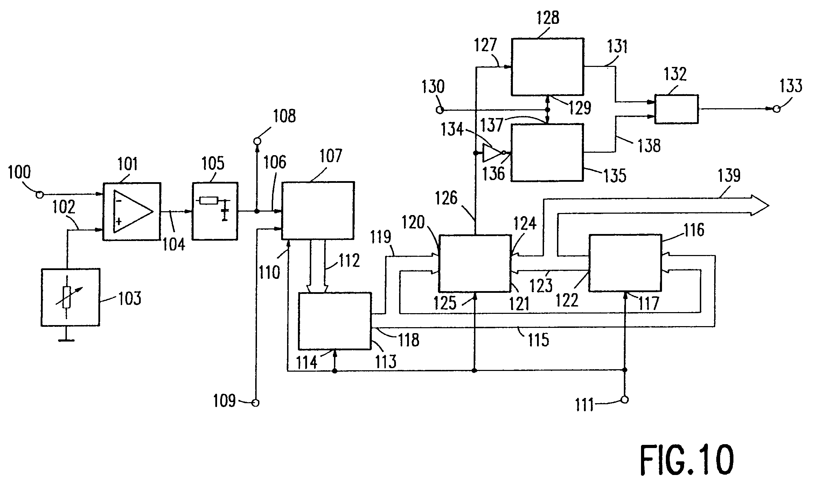

Zur Steuerung der beschriebenen Schaltungsanordnung gemäß dem zu Fig. 1 und 2 beschriebenen Verfahren ist weiterhin eine Ablaufsteuerung 32 vorgesehen, über deren Steuerausgänge 33, 34, 35 bzw. 36 der Speicherwahlschalter 5, der erste und zweite Taktsignalumschalter 30, 31 bzw. der Signalwahlschalter 18 gesteuert werden. Der Ablaufsteuerung 32 werden dazu über einen ersten Steuereingang 37 ein Betriebsartensignal von einem Betriebsartensignalanschluß 38, an einem zweiten und dritten Steuereingang 39 bzw. 40 das Horizontal- bzw. das Vertikalsynchronsignal aus dem Fernsehsignal und an einem vierten Steuereingang 41 ein Schwarzzeilenerkennungssignal zugeführt. Das Schwarzzeilenerkennungssignal wird dabei einer schwarzzeilenerkennungsstufe 42 entnommen, der das Fernsehsignal vom Ausgang 3 zugeführt wird und die das Schwarzzeilenerkennungssignal für den Fall bildet, daß in dem vorgegebenen Fernsehsignal am oberen oder unteren Rand des Fernsehbildes Zeilen enthalten sind, die ausschließlich einen schwarzen Bildinhalt aufweisen. Ein Beispiel für eine Ausgestaltung der Schwarzzeilenerkennungsstufe 42 ist in Fig. 10 näher erläutert.

Der Signalwahlschalter 18 weist außer den Eingängen 16, 17 für die Fernsehsignale von den Halbbildspeichern 10, 11 einen dritten Eingang 43 und einen vierten Eingang 44 auf, die, wie der erste und der zweite Eingang 16, 17, wahlweise mit dem Ausgang 19 verbindbar sind. Über den dritten Eingang 43 werden zur Einfügung in das umgewandelte Signal neu erzeugte Horizontalsynchronimpulse zugeführt, während der vierte Eingang 44 zum Zuleiten eines Füllsignals vorgesehen ist, das vorzugsweise dem Schwarzpegel des Fernsehsignals entspricht und durch das beim Rücküberführen des umgewandelten Signals in ein Fernsehsignal mit dem Format des ursprünglich vorgegebenen Fernsehsignals die aus letzterem nicht umgewandelten Abschnitte ergänzt werden.

Die Taktsignalumschalter 30, 31 weisen eine Mittelstellung 45 bzw. 46 auf, in der den mit ihnen verbundenen Takteingängen 12 bzw. 13 keines der beiden Taktsignale von den Oszillatoren 28 bzw. 29 zugeführt wird. In diese Mittelstellungen 45 bzw. 46 werden die Taktsignalumschalter 30 bzw. 31 immer dann überführt, wenn aus den Halbbildspeichern 10 bzw. 11 keine Signalabschnitte ausgelesen bzw. in dieselben keine Signalabschnitte eingespeichert werden sollen.

Beim Betrieb der Schaltungsanordnung nach Fig. 8 gemäß dem in Fig. 1 dargestellten Verfahren zur Bildung eines umgewandelten Signals wird das vorgegebene, insbesondere normgemäße Fernsehsignal über den Eingangsanschluß 1 und den Eingangsumschalter 2 dessen Ausgang 3 zugeführt. Von dort gelangt es einerseits auf die Schwarzzeilenerkennungsstufe 42, die zu Beginn eines jeden Halbbildes den oberen schwarzen Streifen OS erkennt und der Ablaufsteuerung 32 über den vierten Steuereingang ein entsprechendes Schwarzzeilenerkennungssignal zuleitet. Die Ablaufsteuerung 32 bringt daraufhin den ersten Taktsignalumschalter 30 in seine Mittelstellung 45, so daß der erste Halbbildspeicher 10 nicht getaktet wird. Da während dieses Zeitintervalls die im zweiten Halbbildspeicher 11 gespeicherten Signalabschnitte als umgewandeltes Signal ausgelesen werden müssen, wird über den dritten Steuerausgang 35 der Ablaufsteuerung 32 der zweite Taktsignalumschalter 31 in seine untere Stellung geschaltet, so daß dem Takteingang 13 des zweiten Halbbildspeichers 11 das zweite Taktsignal des zweiten Oszillators 29 zugeführt wird. Entsprechend erscheint am Ausgang 15 des zweiten Halbbildspeichers 11 das umgewandelte Signal des voraufgehenden Halbbildes in der zugehörigen zeitlichen Dehnung. Über den zweiten Eingang 17 des Signalwahlschalters 18 wird es dem Ausgang 19 und weiter über den Ausgangsumschalter 20 und die FM-Modulationsstufe 23 dem Aufzeichnungsträger 24 zur Aufnahme zugeführt.

Inzwischen wird zu Beginn der dem vorgegebenen Fernsehsignal zu entnehmenden Signalabschnitte des gerade dem Eingangsanschluß 1 zugeführten Halbbildes das Schwarzzeilenerkennungssignal abgeschaltet, da nun Zeilen mit nicht ausschließlich schwarzem Bildinhalt folgen. Entsprechend wird über den zweiten Steuerausgang 34 der erste Taktsignalumschalter 30 aus seiner Mittelstellung 45 in die obere Stellung verbracht, in der vom ersten Oszillator 28 das erste Taktsignal an den Takteingang 12 des ersten Halbbildspeichers 10 geliefert werden kann. Mit diesem Taktsignal wird dann der dem Fernsehsignal zu entnehmende Signalabschnitt des aktuellen Halbbildes vom Ausgang 3 des Eingangsumschalters 2 über den Speicherwahlschalter 5 dem Eingang 8 des ersten Halbbildspeichers 10 zugeleitet. Dazu ist über den ersten Steuerausgang 33 der Ablaufsteuerung 32 der Speicherwahlschalter 5 in die in Fig. 8 dargestellte, obere Stellung überführt worden, in der der Eingang 4 mit dem ersten Ausgang 6 verbunden ist.

Am Ende des dem aktuell zugeführten Halbbild zu entnehmenden Signalabschnitts, d.h. zu Beginn des unteren schwarzen Streifens US, wird von der Schwarzzeilenerkennungsstufe 42 wieder ein Schwarzzeilenerkennungssignal erzeugt und dem vierten Steuereingang 41 zugeleitet. Die Ablaufsteuerung 32 schaltet daraufhin den ersten Taktsignalumschalter 30 in seine untere Stellung um, so daß im folgenden dem Takteingang 12 des ersten Halbbildspeichers 10 das Taktsignal vom zweiten Oszillator 29 zugeleitet wird. Gleichzeitig wird der Signalwahlschalter 18 in die Stellung umgeschaltet, in der der erste Eingang 16 mit dem Ausgang 19 verbunden ist. Im folgenden wird der im ersten Halbbildspeicher 10 gespeicherte Signalabschnitt als umgewandeltes Signal ausgelesen und dem Aufzeichnungsträger 24 zugeführt.

Zu Beginn des unteren schwarzen Streifens des aktuellen Halbbildes ist außerdem über den dritten Steuerausgang 35 der zweite Taktsignalumschalter 31 in seine Mittelstellung 46 überführt worden. Er verharrt in dieser bis zum Ende des oberen schwarzen Streifens OS des nachfolgenden Halbbildes und wird dann in die obere Stellung überführt, so daß daraufhin vom ersten Oszillator 28 das erste Taktsignal dem Takteingang 13 des zweiten Halbbildspeichers zum Speichern der dem zweiten Halbbild zu entnehmenden Signalabschnitte zugeführt werden kann.

Die in Fig. 8 als Mittelstellungen 45, 46 der Taktsignalumschalter 30, 31 dargestellten Betriebszustände sind in Fig. 1 durch die niedrigen Signalpegel des Aktivierungssignals nach Teilfigur d) und f) dargestellt. Dies entspricht einer Variation der Halbbildspeicher 10, 11, bei der diese unmittelbar das Aktivierungssignal zur Sperrung bzw. Freigabe der Takteingänge 12, 13 zugeführt erhalten.

In entsprechender, der Fig. 2 entnehmbarer Folge der Schaltzustände des Speicherwahlschalters 5, der Taktsignalumschalter 30, 31 sowie des Signalwahlschalters 18 wird der Betrieb der Schaltungsanordnung nach Fig. 8 beim Rücküberführen des umgewandelten Signals vom Aufzeichnungsträger 25 bei der Wiedergabe an den Ausgangsanschluß 27 vorgenommen. In den Zeitintervallen, in denen im rückgewonnenen Fernsehsignal der ursprünglichen Form obere und untere schwarze Streifen OS, US erzeugt werden sollen, wird der Signalwahlschalter 18 in die Stellung verbracht, in der der vierte Eingang 44 mit dem Ausgang 19 verbunden ist.

Bei der Bildung des umgewandelten Signals kann außerdem die Zufuhr des ersten Taktsignals vom ersten Oszillator 28 für das Einspeichern der entnommenen Signalabschnitte durch Überführen der Taktsignalumschalter 30, 31 in ihre Mittelstellungen 45, 46 bei jedem Horizontalsynchronsignal des vorgegebenen Fernsehsignals unterbrochen werden; gegebenenfalls kann anstelle der Horizontalsynchronsignale ein verkürztes Signal eingespeichert werden. Beim Bildes des umgewandelten Signals durch Auslesen der Halbbildspeicher mit dem zweiten Taktsignal wird dieses durch entsprechendes Einschalten der Mittelstellungen 45, 46 immer dann unterbrochen, wenn in das umgewandelte Signal nach dem zeitlichen Rhythmus der Horizontalsynchronsignale des vorgegebenen, insbesondere normgemäßen Fernsehsignals ein Horizontalsynchronimpuls erscheinen muß. Während der von diesen Horizontalsynchronimpulsen eingenommenen Zeitintervalle wird der Signalwahlschalter 18 seinen dritten Eingang 43 mit dem Ausgang 19 verbinden und wird über diese Verbindung ein neu erzeugter Horizontalsynchronimpul dem Aufzeichnungsträger 24 zugeführt. Bevorzugt werden diese neu erzeugten Horizontalsynchronimpulse durch Abtrennen der Horizontalsynchronimpulse aus dem vorgegebenen, insbesondere normgemäßen Fernsehsignal und gegebenenfalls durch Verkürzen dieser abgetrennten Impulse erzeugt. Gegenüber der Ausführungsform des erfindungsgemäßen Verfahrens, in der auch die Horizontalsynchronsignale in gleicher Weise wie der Bildinhalt in das umgewandelte Signal überführt werden, wird bei der Neueinfügung der Horizontalsynchronimpulse ein unverändertes zeitliches Raster dieser Impulse auf dem Aufzeichnungsträger im Vergleich zu einem normgemäß aufgezeichneten Fernsehsignal erhalten. Dadurch können alle Steuerungen, die für den Betrieb des Aufzeichnungsträgers auf das zeitliche Raster der Horizontalsynchronimpulse zurückgreifen, für jedes aufgezeichnete Signal unverändert arbeiten.

Das Ausführungsbeispiel nach Fig. 8 ist mit zwei Halbbildspeichern 10, 11 erläutert worden; anstelle dieser Halbbildspeicher können jedoch auch kleinere Speicheranordnungen Verwendung finden, beispielsweise die für das Verfahren gemäß Fig. 3 und 4 benötigten Speicherbereiche. Die Umschaltung dieser Speicherbereiche zwischen der Betriebsart des Einspeicherns und des Auslesens muß dann gemäß Fig. 3 und 4 in kürzeren zeitlichen Abständen durch die Ablaufsteuerung 32 erfolgen.

Fig. 10 zeigt als Blockschaltbild den schematischen Aufbau eines Beispiels für eine Ausführung der Schwarzzeilenerkennungsstufe 42 aus Fig. 8. Das auszuwertende Signal, beispielsweise vom Ausgang 3 in Fig. 8, wird einem Signaleingang 100 einer Komparationsstufe 101 zugeführt, deren Bezugssignaleingang 102 von einem Schwellenwertgeber 103 ein einstellbarer Schwellenwert zugeleitet wird, der beispielsweise 2 % der Weißamplitude des dem Signaleingang 100 zugeführten Fernsehsignals entspricht. Die Signalformen sind schematisch und nicht maßstäblich in Fig. 9 anhand des Luminanzanteils Y des Fernsehsignals über der Zeit t dargestellt. Dabei sind H Horizontalsynchronimpulse, mit S ist der Schwarzpegel im Fernsehsignal bezeichnet, mit B der Schwellenwert vom Schwellenwertgeber 103, und BI deutet einen Verlauf des Luminanzanteils im Fernsehsignal bei Vorliegen eines vom Schwarzpegel verschiedenen Bildinhalts an. Der Abstand zwischen dem Schwarzpegel S und dem Schwellenwert B ist zum Erreichen einer Stör- und Rauschsicherheit gewählt.

Bei Vorliegen eines Signals mit dem Schwarzpegel S liefert die Komparationsstufe 101 an ihrem Ausgang 104 einen hohen Signalpegel, während das Signal am Ausgang 104 bei Auftreten eines Bildinhalts (BI) einen niedrigen Signalpegel annimmt. Dieses Signal wird über ein Tiefpaßfilter 105, das digital oder analog aufgebaut sein kann, einem Aktivierungseingang 106 eines ersten Zählers 107 zugeleitet und kann außerdem an einer Anschlußklemme 108 abgegriffen werden. Am Zähleingang 109 des ersten Zählers 107 liegen die Horizontalsynchronimpulse des vorgegebenen, insbesondere normgemäßen Fernsehsignals an. Der erste Zähler 107 zählt mit den Horizontalsynchronimpulsen aufwärts, wenn am Aktivierungseingang 106 ein hoher Signalpegel anliegt. Dies ist der Fall beim Auftreten von lediglich einen Schwarzpegel enthaltenden Zeilen des Fernsehsignals, während ein einzelner Horizontalsynchronimpuls H, durch den ebenfalls der Schwellenwert B unterschritten wird, durch das Tiefpaßfilter 105 unterdrückt wird. Dadurch ist sichergestellt, daß der erste Zähler 107 nur die lediglich einen Schwarzpegel S enthaltenden Zeilen des Fernsehsignals zählt, d.h. die Breite von im Fernsehsignal auftretenden schwarzen Streifen, beispielsweise OS und US.

Dem ersten Zähler 107 wird an einem Rücksetzeingang 110 von einem Vertikalsynchroneingang 111 das Vertikalsynchronsignal des vorgegebenen, insbesondere normgemäßen Fernsehsignals zugeführt. Der erste Zähler 107 wird also nach dem jedem Halbbild zurückgesetzt. Vor diesem Rücksetzen wird der letzte Zählerstand des ersten Zählers 107 über eine Datenleitung 112 einem ersten Zwischenspeicher 113 zugeführt. Dem ersten Zwischenspeicher 113 wird weiterhin über einen Steuereingang 114 das Vertikalsynchronsignal vom Vertikalsynchroneingang 111 zugeführt. Vorzugsweise erfolgt das Abspeichern des Zählerstands des ersten Zählers 107 mit der Vorderflanke des Vertikalsynchronsignals, während mit seiner Rückflanke der erste Zähler 107 zurückgesetzt wird. Zu Beginn des nachfolgenden Halbbildes wird dann der erste Zähler 107 erneut die Anzahl der nur einen schwarzen Bildinhalt umfassenden Zeilen des vorgegebenen Fernsehsignals zählen.

Bei jedem Halbbildwechsel wird außerdem der im ersten Zwischenspeicher 113 gespeicherte, letzte Zählerstand des ersten Zählers 107 über eine weitere Datenleitung 115 einem zweiten Zwischenspeicher 116 zugeführt und darin durch das Vertikalsynchronsignal vom Vertikalsynchroneingang 111 über einen Steuereingang 117 des zweiten Zwischenspeichers 116 gespeichert. Auf diese Weise enthält der zweite Zwischenspeicher 116 stets den vorletzten und der erste Zwischenspeicher 113 stets den letzten Zählerstand des ersten Zählers 107.

Vom mit der weiteren Datenleitung 115 verbundenen Ausgang 118 des ersten Zwischenspeichers 113 wird der letzte Zählerstand weiterhin über eine dritte Datenleitung 119 einem ersten Dateneingang 120 eines digitalen Komparators 121 zugeführt, wohingegen der vorletzte Zählerstand vom zweiten Zwischenspeicher 116 über dessen Datenausgang 122 und eine vierte Datenleitung 123 einem zweiten Dateneingang 124 des digitalen Komparators 121 zugeleitet wird. Im digitalen Komparator 121 wird bei Zuführen des Vertikalsynchronsignals vom Vertikalsynchroneingang 111 über einen Steuereingang 125 als Steuersignal ein digitaler Vergleich des letzten und des vorletzten Zählerstandes des ersten Zählers 107 durchgeführt. Wenn beide Zählerstände übereinstimmen und außerdem ein hinreichend hoher Zählerstand, beispielsweise mindestens 16 Zeilen mit ausschließlich schwarzem Bildinhalt, vorliegt, wie dies bei den oberen und unteren schwarzen Streifen OS und US im Fernsehbild bei Übertragung eines Kinofilms der Fall ist, wird vom digitalen Komparator 121 an einem Ausgang 126 ein Freigabesignal abgegeben. Das Freigabesignal wird einem Aktivierungseingang 127 eines dritten Zählers 128 zugeleitet und gibt diesen zum Zählen von Impulsen frei, die über einen Zähleingang 129 von einem Anschluß 130 zugeleitet werden. Dem Anschluß 130 können wahlweise Horizontalsynchronimpulse oder das Vertikalsynchronsignal zugeführt werden, so daß der dritte Zähler 128 nach Freigabe durch den digitalen Komparator 121 diese Impulse zählt. Erreicht der dritte Zähler 128 einen vorgegebenen Zählerstand, wird über eine Leitung 131 ein Setzsignal an ein RS-Kippglied 132 geliefert, durch das dieses gesetzt wird und an seinem Ausgang 133 einen hohen Signalpegel abgibt. Dieser hohe Signalpegel zeigt das Vorhandensein schwarzer Streifen im Fernsehbild an und kann damit unmittelbar als Schwarzzeilenerkennungssignal dem vierten Steuereingang 41 der Ablaufsteuerung 32 nach Fig. 8 zugeleitet werden. Entsprechend stellt der Ausgang 133 den Ausgang der Schwarzzeilenerkennungsstufe 42 dar.

Der digitale Komparator 121 liefert vorzugsweise aus Sicherheitsgründen auch dann an seinem Ausgang 126 ein Freigabesignal, wenn nur geringfügige Schwankungen im Zählerstand des ersten Zählers 107 auftreten, die dem digitalen Komparator 121 von den Zwischenspeichern 113 und 116 zugeführten Daten somit nur ungefähr übereinstimmen. Beispielsweise kann eine Abweichung um fünf Zeilen nach beiden Seiten zulässig sein. Dadurch wird sichergestellt, daß bei geringfügigen Schwankungen z.B. während der Übertragung eines Kinofilms nicht sofort das Freigabesignal und damit das Schwarzzeilenerkennungssignal unterbrochen werden.

Der Sicherheit gegenüber Schwankungen oder zufälligerweise dunklen Bildinhalten dient auch der dritte Zähler 128. Der von ihm zu erreichende Zählerstand sollte einem Zeitintervall von beispielsweise etwa fünf Sekunden entsprechend 256 Vertikalsynchronimpulsen eines normgemäßen PAL-Fernsehsignals gleichkommen. Werden dem Anschluß 130 statt dessen Horizontalsynchronimpulse zugeleitet, muß ein entsprechend erhöhter Zählerstand erreicht werden, bevor über die Leitung 131 das Setzsignal abgegeben wird.

Liegt dagegen im Fernsehbild kein schwarzer Streifen vor, so daß der erste Zähler 107 nicht zählt und damit die Zwischenspeicher 113, 116 lediglich den Wert Null enthalten, oder werden die schwarzen Streifen im Fernsehbild beendet, so daß ein Rückgang des Zählerstandes des ersten Zählers 107 verzeichnet wird, wird das Freigabesignal am Ausgang 126 des digitalen Komparators 121 beendet, d.h. der dort anliegende Signalpegel einen niedrigen Wert annehmen. Der dritte Zähler 128 wird dann gesperrt, so daß ein Setzsignal auf der Leitung 131 nicht mehr auftreten kann. Statt dessen wird über einen Inverter 134 ein zweiter Zähler 135 über seinen Aktivierungseingang 136 entriegelt, so daß die weiterhin an seinem Zähleingang 137 auftretenden, vom Anschluß 130 zugeführten Impulse nun vom zweiten Zähler 135 gezählt werden. Erreicht der zweite Zähler 135 einen bestimmten Zählerstand, der z.B. 32 Vertikalsynchronimpulsen entspricht, wird auf einer weiteren Leitung 138 ein Rücksetzsignal abgegeben, durch das das RS-Kippglied 132 rückgesetzt und damit das Schwarzzeilenerkennungssignal am Ausgang 133 beendet wird. Auch der zweite Zähler 135 dient der Unterdrückung kurzzeitiger Schwankungen oder Störungen.

Die Höhe des Zählerstands des ersten Zählers 107 gibt Auskunft über die Breite der schwarzen Streifen, z.B. OS und US, die wiederum zur Bestimmung des Verhältnisses der Frequenzen der Taktsignale der Oszillatoren 28, 29 herangezogen wird. Der Zählerstand wird daher vom Datenausgang 122 des zweiten Zwischenspeichers 116 auch einer Datenausgangsleitung 139 zugeführt. Über diese kann der Zählerstand des ersten Zählers 107 dem zweiten Oszillator 29 zur Einstellung der Frequenz des zweiten Taktsignals oder einer Steuerschaltung zugeführt werden, durch die über eine PLL- oder VCO-Schaltung aus der festen Frequenz des ersten Oszillators 28 das zweite Taktsignal abgeleitet wird. Der Zählerstand des ersten Zählers 107 bestimmt dann den Teilerfaktor, der in dieser PLL- oder VCO-Schaltung benutzt werden muß.

Das Schwarzzeilenerkennungssignal am Ausgang 133 kann außerdem zur Erkennung des Beginns eines Kinofilms ausgenutzt werden. Dadurch kann beispielsweise der Aufnahmebetrieb eines Videorecorders exakt zu Beginn eines solchen Kinofilms gestartet werden. Eine derartige Einrichtung kann die Funktionsweise der bekannten sogenannten Video-Programm-Systeme ergänzen oder unterstützen.

**Patentansprüche**

1. Verfahren zum Umwandeln eines vorgegebenen, insbesondere normgemäßen Fernsehsignals,
dadurch gekennzeichnet, daß daraus Signalabschnitte, die vorbestimmten Abschnitten von Zeilen einer vorbestimmten Zeilengruppe eines Fernsehbildes entsprechen, entnommen und in ein in seinem Zeitmaßstab derart umgewandeltes Signal überführt werden, daß die Signalabschnitte darin wenigstens nahezu das gesamte, dem Fernsehbild zugeordnete Zeitintervall des Fernsehsignals kontinuierlich ausfüllen.

2. Verfahren nach Anspruch 1,
dadurch gekennzeichnet, daß zum Rückgewinnen des (ursprünglich) vorgegebenen, insbesondere normgemäßen Fernsehsignals das einem Fernsehbild zugeordnete umgewandelte Signal in die vorbestimmten Signalabschnitte überführt und die übrigen Abschnitte des dem Fernsehbild zugeordneten Zeitintervalls des Fernsehsignals mit einem Füllsignal ausgefüllt werden.

3. Verfahren nach Anspruch 1 oder 2,
dadurch gekennzeichnet, daß das umgewandelte Signal einem Medium zugeführt bzw. aus diesem entnommen wird.

4. Verfahren nach Anspruch 3,
dadurch gekennzeichnet, daß das Medium durch einen Aufzeichnungsträger gebildet ist.

5. Verfahren nach Anspruch 4,
dadurch gekennzeichnet, daß als Aufzeichnungsträger ein Magnetband dient.

6. Verfahren nach einem der vorhergehenden Ansprüche,
dadurch gekennzeichnet, daß im Fernsehsignal enthaltene Synchron- und/oder Bezugssignale vom Überführen in das umgewandelte Signal ausgenommen sind.

7. Verfahren nach Anspruch 6,
dadurch gekennzeichnet, daß die Folgefrequenz von im Fernsehsignal enthaltenen Zeilensynchronsignalen beim Überführen des Fernsehsignals in das umgewandelte Signal konstant gehalten wird.

8. Verfahren nach einem der vorhergehenden Ansprüche,

dadurch gekennzeichnet, daß dem Fernsehsignal ein Kennsignal hinzugefügt ist zur Kennzeichnung, daß das Fernsehsignal in ein umgewandeltes Signal zu überführen ist.

9. Verfahren nach einem der vorhergehenden Ansprüche,
dadurch gekennzeichnet, daß das Fernsehsignal von einem (Breitwand-) Kinofilm oder einer ähnlichen Bildquelle abgeleitet ist.

10. Verfahren nach Anspruch 8 und 9,
dadurch gekennzeichnet, daß durch das Kennsignal angezeigt wird, daß das Fernsehsignal von einem (Breitwand-) Kinofilm oder einer ähnlichen Bildquelle abgeleitet ist.

11. Verfahren nach Anspruch 9 oder 10,
dadurch gekennzeichnet, daß die dem vorgegebenen, insbesondere normgemäßen Fernsehsignal zu entnehmenden Signalabschnitte nur die einen Bildinhalt des (Breitwand-) Kinofilms enthaltenden Zeilen des Fernsehbildes umfassen.

12. Verfahren nach einem der vorhergehenden Ansrpüche,
dadurch gekennzeichnet, daß Anzahl und/oder Länge der dem vorgegebenen, insbesondere normgemäßen Fernsehsignal zu entnehmenden Signalabschnitte und/oder der übrigen Abschnitte des Fernsehsignals detektiert und daraus ein Maßsignal für die Umwandlung des Zeitmaßstabes des Fernsehsignals in den Zeitmaßstab des umgewandelten Signals gebildet wird.

13. Verfahren nach einem der vorhergehenden Ansprüche,
dadurch gekennzeichnet, daß für das umgewandelte Signal eine gegebene Menge vorbestimmter Fernsehbildformate mit je einer vorbestimmten zeitlichen Ordnung der Signalabschnitte des vorgegebenen, insbesondere normgemäßen Fernsehsignals und einem vorbestimmten Zeitmaßstab des umgewandelten Signals verfügbar ist, und daß die Umwandlung zwischen dem vorgegebenen, insbesondere normgemäßen Fernsehsignal und wahlweise einem der vorbestimmten Fernsehbildformate erfolgt.

14. Verfahren nach Anspruch 12 in Verbindung mit Anspruch 13,
dadurch gekennzeichnet, daß die detektierte Anzahl und/oder Länge der zu entnehmenden Signalabschnitte und/oder übrigen Abschnitte des Fernsehsignals mit einer gegebenen Menge von Sollwerten verglichen wird, von denen jeder einem der vorbestimmten Fernsehbildformate zugeordnet ist, und daß bei zumindest weitgehender Übereinstimmung mit einem der Sollwerte das umgewandelte Signal in dem zugeordneten Fernsehbildformat gebildet wird.

15. Verfahren nach Anspruch 13 in Verbindung mit Anspruch 8, mit Anspruch 10, mit Anspruch 11 oder mit einer Kombination aus den Ansprüchen 9 und 8,
dadurch gekennzeichnet, daß das Fernsehbildformat des umgewandelten Signals durch das Kennsignalb bestimmt wird.

16. Verfahren nach Anspruch 8, nach Anspruch 9 in Verbindung mit Anspruch 8, nach Anspruch 10, 11, nach Anspruch 12 in Verbindung mit einem der Ansprüche 8 bis 11, nach Anspruch 13 in Verbindung mit einem der Ansprüche 8 bis 12, nach Anspruch 14 oder 15,
dadurch gekennzeichnet, daß das Fernsehsignal nur bei Vorliegen des Kennsignals umgewandelt wird.

17. Verfahren nach Anspruch 14,
dadurch gekennzeichnet, daß wenigstens einer der Sollwerte eine Sollzeilenzahl ist, die der Anzahl der Zeilen des Fernsehbildes entspricht, die einen Bildinhalt des (Breitwand-) Kinofilms enthalten.

18. Verfahren nach Anspruch 14,
dadurch gekennzeichnet, daß der Vergleich mit den Sollwerten über eine Zeitdauer vorgenommen wird, die mehreren einem Fernsehbild zugeordneten Zeitintervallen des vorgegebenen, insbesondere normgemäßen Fernsehsignals entspricht.

19. Verfahren nach einem der Ansprüche 2 bis 5 oder einem der Ansprüche 8 bis 18, in Verbindung mit einem der Ansprüche 2 bis 5,
dadurch gekennzeichnet, daß für das Rückgewinnen des (ursprünglich) vorgegebenen, insbesondere normgemäßen Fernsehsignals das Vorliegen einer Umwandlung und/oder der Zeitmaßstab des umgewandelten Signals durch einen Vergleich der zeitlichen Ausdehnungen von im umgewandelten Signal enthaltenen Synchron- und/oder Bezugssignalen mit zugehörigen Synchron- und/oder Bezugssignalen im umgewandelten Signal enthaltenen Synchron- und/oder Bezugssignalen mit zugehörigen Synrochn- und/oder Bezugssignalen im vorgegeben, insbesondere normgemäßen Fernsehsignal ermittelt wird.

20. Verfahren nach einem der Ansprüche 1 bis 18, dadurch gekennzeichnet, daß dem umgewandelten Signal beim Umwandeln aus dem vorgegebenen, inbesondere normgemäßen Fernsehsignal ein Umwandlungsanzeigesignal hinzugefügt wird, das das Vorliegen einer Umwandlung und/oder den Zeitmaßstab des umgewandelten Signals anzeigt.

21. Verfahren nach Anspruch 20 in Verbindung mit einem der Ansprüche 6, 7, 8, 10, 12, 14, 15, 16, 17, 18,
dadurch gekennzeichnet, daß das Umwandlungsanzeigesignal aus dem Kennsignal abgeleitet wird.

22. Verfahren nach Anspruch 20 in Verbindung mit Anspruch 12,
dadurch gekennzeichnet, daß das Umwandlungsanzeigesignal aus dem Maßsignal für die Umwandlung des Zeitmaßstabes abgeleitet wird.

23. Verfahren nach einem der vorhergehenden Ansprüche,
dadurch gekennzeichnet, daß beim Überführen des vorgegebenen, insbesondere normgemäßen Fernsehsignals in das umgewandelte Signal nur ein im Fernsehsignal enthaltenes Leuchtdichtesignal umgewandelt wird.

24. Verfahren nach einem der Ansprüche 1 bis 22, dadurch gekennzeichnet, daß beim Überführen des vorgegebenen, insbesondere normgemäßen Fernsehsignals in das umgewandelte Signal ein im Fernsehsignal enthaltenes Leuchtdichtesignal und ein Farbsignal umgewandelt werdne.

25. Verfahren nach Anspruch 24, bei dem das Farbsignal einer Trägerschwingung aufmoduliert ist,
dadurch gekennzeichnet, daß die Frequenz der Trägerschwingung entsprechend der Umwandlung des Zeitmaßstabes umgesetzt wird.

26. Verfahren nach Anspruch 24,
dadurch gekennzeichnet, daß das Leuchtdichte- und Farbsignal aus dem vorgegebenen, insbesondere normgemäßen Fernsehsignal vor dem Umwandeln getrennt werden und unabhängig nach dem der Umwandlung zugrundeliegenden Zeitmaßstab in umgewandelte Signale überführt werden.

27. Schaltungsanordnung zur Durchführung des Verfahrens nach einem der Ansprüche 1 bis 26,
gekennzeichnet durch einen Speicher, in dem die Signalabschnitte des vorgegebenen, insbesondere normgemäßen Fernsehsignals mit Hilfe eines ersten Taktsignals gespeichert und aus dem sie mit Hilfe eines zweiten Taktsignals ausgelesen werden, wobei das Verhältnis der Taktfrequenzen der Taktsignale der Änderung des Zeitmaßstabes bei der Umwandlung entspricht.

28. Schaltungsanordnung nach Anspruch 27, dadurch gekennzeichnet, daß der Speicher als Vollbildspeicher ausgebildet ist.

29. Schaltungsanordnung nach Anspruch 28, dadurch gekennzeichnet, daß der Speicher in zwei Halbbildspeicher gegliedert ist, in denen aus je einem Halbbild des im Zeilensprungverfahren übertragenen Fernsehsignals die umzuwandelnden Signalabschnitte gespeichert werden.

30. Schaltungsanordnung nach Anspruch 29, dadurch gekennzeichnet, daß der Speicher in eine Gesamtanzahl von wenigstens drei Speicherbereichen unterteilt ist, von denen wenigstens zwei, jedoch wenigstens einer weniger als die Gesamtanzahl und mehr als die Hälfte der Gesamtanzahl zum Speichern eines aktuell zugeführten Halbbildes des Fernsehsignals zusammengefaßt werden und dadurch für dieses Halbbild einenHalbbildspeicher bilden, während in dem oder den übrigen Speicherbereich(en) noch die letzten Teile des voraufgehenden Halbbildes gespeichert sind und zum Bilden des umgewandelten Signals der letzten Teile des voraufgehenden Halbbildes ausgelesen werden, und daß die Speicherbereiche zyklisch abwechselnd zum Speichern und Auslesen herangezogen werden.

31. Schaltungsanordnung nach Anspruch 27, dadurch gekennzeichnet, daß der Speicher als Halbbildspeicher mit wahlfreiem Zugriff ausgebildet ist und daß die umzuwandelnden Signalabschnitte je eines Halbbildes im Zeitmaßstab des vorgegebenen, insbesondere normgemäßen Fernsehsignals mit Hilfe des ersten Taktsignals gespeichert und wenigstens nahezu gleichzeitig beginnend mit Hilfe des zweiten Taktsignals im Zeitmaßstab des umgewandelten Signals ausgelesen werden.

32. Schaltungsanordnung nach Anspruch 27, dadurch gekennzeichnet, daß der Speicher als sogenannter FIFO-Speicher ausgebildet ist.

33. Schaltungsanordnung nach einem der Ansprüche 27 bis 32,
dadurch gekennzeichnet, daß zum Rückgewinnen des (ursprünglich) vorgegebenen, insbesondere normgemäßen Fernsehsignals das umgewandelte Signal mit Hilfe des zweiten Taktsignals im Speicher gespeichert und mit Hilfe des ersten Taktsignals ausgelesen wird.

34. Schaltungsanordnung zur Durchführung des Verfahrens nach Anspruch 12 oder einem der Ansprüche 13 bis 26 in Verbindung mit Anspruch 12,
gekennzeichnet durch eine Detektionseinrichtung zum Detektieren von nicht durchgehend einen schwarzen Bildinhalt darstellenden Abschnitten des vorgegebenen, insbesondere normgemäßen Fernsehsignals als zu entnehmende Signalabschnitte.

35. Schaltungsanordnung nach Anspruch 34,
dadurch gekennzeichnet, daß die Detektionseinrichtung umfaßt:
- eine erste vergleichsstufe zum vergleichen des vorgegebenen, insbesondere normgemäßen Fernsehsignals mit einem Referenzpegel und Erkennen von wenigstens nahzu einen schwarzen Bildinhalt darstellenden Abschnitten des Fernsehsignals,
- eine erste Zeitstufe zum Unterdrücken des Einflusses von Synchron- und/oder Bezugssignalen im vorgegebenen, insbesondere normgemäßen Fernsehsignal auf die erste vergleichsstufe,
- eine erste Zählvorrichtung zum Ermitteln der Anzahl von Zeilen in einem Halbbild des vorgegebenen, insbesondere normgemäßen Fernsehsignals, die wenigstens nahezu einen schwarzen Bildinhalt darstellen,
- eine zweite vergleichsstufe zum Feststellen zeitlicher Änderungen der ermittelten Anzahl von Zeilen,
- eine zweite Zeitstufe zum Bilden eines von kurzzeitigen Schwankungen befreiten Maßsignals bzw. eines eine Information darüber gebenden Signals, daß ein umzuwandelndes Fernsehsignal vorliegt.

FIG.1

EP 0 501 554 A2

FIG.2

FIG.3

EP 0 501 554 A2

FIG.4

EP 0 501 554 A2

FIG.5

EP 0 501 554 A2

FIG.6

FIG.7

FIG.8

FIG.9

FIG.10